(19) Europäisches Patentamt / European Patent Office / Office européen des brevets

(11) EP 4 742 517 A1

(12) **EUROPEAN PATENT APPLICATION**
published in accordance with Art. 153(4) EPC

(43) Date of publication:
**13.05.2026 Bulletin 2026/20**

(21) Application number: **24876168.6**

(22) Date of filing: **23.07.2024**

(51) International Patent Classification (IPC):
**H02K 33/18** (2006.01)

(52) Cooperative Patent Classification (CPC):
**G02B 7/09; G03B 13/36; G03B 30/00; H02K 33/18; H04N 23/57**

(86) International application number:
**PCT/CN2024/106905**

(87) International publication number:
**WO 2025/077348 (17.04.2025 Gazette 2025/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.10.2023 CN 202311332772**

(71) Applicant: **Honor Device Co., Ltd.**
**Shenzhen, Guangdong 518040 (CN)**

(72) Inventors:
• **WANG, Weicheng**
**Shenzhen, Guangdong 518040 (CN)**
• **YUAN, Shuai**
**Shenzhen, Guangdong 518040 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **MOTOR, CAMERA MODULE AND ELECTRONIC DEVICE**

(57)    Embodiments of this application relate to the motor field, and provide a motor, a camera module, and an electronic device. The motor include a lens carrier, a frame, a magnetic attraction mechanism, and two slide rail mechanisms. The two slide rail mechanisms are diagonally disposed between the frame and the lens carrier on a plane perpendicular to an optical axis direction of a lens and are configured to provide sliding support surfaces for movement of the lens carrier in the optical axis direction to reduce a friction force. A magnetic attraction force generated by the magnetic attraction mechanism is used to abut the lens carrier against the slide rail mechanisms. Because the two slide rail mechanisms are diagonally disposed, structural distribution is uniform, so that an overall force on the lens carrier becomes uniform. This facilitates structural stability, reduces a requirement of the motor on a magnetic attraction force, reduces a requirement for a driving force in autofocus, reduces power consumption and costs, facilitates a miniaturization design of the motor, and simplifies overall design difficulty.

FIG. 5

## Description

This application claims priority to Chinese Patent Application No. 202311332772.0, filed with the China National Intellectual Property Administration on October 13, 2023 and entitled "MOTOR, CAMERA MODULE, AND ELECTRONIC DEVICE", which is incorporated herein by reference in its entirety.

## TECHNICAL FIELD

This application relates to the motor field, and more specifically, to a motor, a camera module, and an electronic device.

## BACKGROUND

Motors are configured in current camera modules, and the motors generally have an autofocus function. For the autofocus function, a lens in a camera module is driven, by using a driving force provided by the motor, to move in an optical axis direction of the lens, to implement a focusing function.

Currently, most motors are voice coil motors (voice coil motors, VCMs) implementing the autofocus function. The VCM motors are further classified into a ball-type motor and a spring-suspended motor. For the ball-type motor, a ball is disposed between a lens carrier of the motor and a frame sleeved on the lens carrier, to implement movement of the lens in the optical axis direction, so as to reduce resistance during movement. In addition, a magnetic attraction structure is further disposed on a same side on which the ball is disposed. A magnetic attraction force generated by the magnetic attraction structure enables the lens carrier to abut against the ball as much as possible, to maintain structural stability as much as possible and maximize utilization of contact between the ball and the lens carrier to reduce resistance.

After the motor cooperates with the lens, a weight of a mover including the lens carrier and the lens is large. Because of the foregoing structure, a large magnetic attraction force is needed. In this case, the large magnetic attraction force causes an increase of a friction force during movement of the mover, and a driving force also increases with the friction force. Consequently, power consumption and costs increase. In addition, this does not facilitate a miniaturization design of the motor and increases overall design difficulty.

## SUMMARY

Embodiments of this application provide a motor, a camera module, and an electronic device, to reduce a magnetic attraction force, so as to reduce design difficulty.

According to a first aspect, a motor is provided and includes: a housing, a lens carrier accommodated in the housing, a frame, a magnetic attraction mechanism, and two slide rail mechanisms. The lens carrier is configured to mount a lens. The two slide rail mechanisms are diagonally disposed between the frame and the lens carrier on a first plane perpendicular to a z direction and are configured to provide sliding support surfaces for movement of the lens carrier in the z direction parallel to an optical axis direction. One part of the magnetic attraction mechanism is disposed on the lens carrier, and the other part of the magnetic attraction mechanism is disposed on the frame. A generated magnetic attraction force is used to abut the lens carrier against the slide rail mechanisms.

In the foregoing embodiment, the motor includes two slide rail mechanisms that are disposed diagonally, so that the lens carrier interacts with the slide rail mechanisms at diagonal positions. In this way, an overall force on the lens carrier becomes uniform. This facilitates structural stability. Compared with a ball-type motor in the conventional technology in which a ball is disposed on one side, the motor with good stability in this application can avoid a phenomenon that the motor may undergo large-scale inversion in any state. Therefore, a needed magnetic attraction force is decreased, that is, the lens carrier may be in good contact with the slide rail mechanisms by using a small magnetic attraction force, so that the lens carrier well abuts against the slide rail mechanisms. This reduces a driving force needed in autofocus, reduces power consumption and costs, improves a focusing speed, facilitates a miniaturization design of the motor, and effectively simplifies overall design difficulty.

Optionally, the slide rail mechanism includes a guide post.

In the foregoing embodiment, because the guide post and the lens carrier are in surface contact with each other, a contact area between the guide post and the lens carrier is increased, so that a large extrusion force can be withstood. This prevents dents from being formed on the lens carrier, and facilitates movement of the lens carrier and the lens in the z direction, thereby improving the focusing speed. This is very applicable to a scenario involving a heavy lens. In addition, a columnar structure formed by extending the guide post in the z direction helps well guide movement of the lens carrier in the z direction. In this way, the lens carrier is not prone to tilting, thereby further improving structural stability.

Optionally, two guide grooves are formed between the lens carrier and the frame. The two guide grooves correspond to the two slide rail mechanisms. One guide groove accommodates a corresponding slide rail mechanism. The guide groove includes a first opening slot disposed on the lens carrier and a second opening slot disposed on the frame.

For example, the two guide grooves include a first guide groove and a second guide groove. The two slide rail mechanisms include a first slide rail mechanism and a second slide rail mechanism. The first guide groove accommodates the corresponding first slide rail mechanism, and the second guide groove accommodates the corresponding second slide rail mechanism.

Optionally, the magnetic attraction mechanism includes two magnetic attraction assemblies. The two magnetic attraction assemblies are respectively located on two sides of the lens carrier or the frame. The two magnetic attraction assemblies are respectively adapted to the two guide grooves. A direction of a magnetic attraction force generated by a magnetic attraction assembly is the same as an opening direction of a first opening slot of an adapted guide groove. One magnetic attraction assembly includes a first magnet and a first magnetically conductive sheet disposed corresponding to the first magnet, and the other magnetic attraction assembly includes a second magnet and a second magnetically conductive sheet disposed corresponding to the second magnet. One of the first magnet and the first magnetically conductive sheet is disposed on the lens carrier, and the other one of the first magnet and the first magnetically conductive sheet is disposed on the frame. One of the second magnet and the second magnetically conductive sheet is disposed on the lens carrier, and the other one of the second magnet and the second magnetically conductive sheet is disposed on the frame.

For example, the two magnetic attraction assemblies include a first magnetic attraction assembly and a second magnetic attraction assembly. The first magnetic attraction assembly is adapted to the first guide groove, and the second magnetic attraction assembly is adapted to the second guide groove. The first magnetic attraction assembly includes the first magnet and the first magnetically conductive sheet, and the second magnetic attraction assembly includes the second magnet and the second magnetically conductive sheet.

In the foregoing embodiment, the two magnetic attraction assemblies located on two sides of the lens carrier or the frame respectively generate magnetic attraction forces in different directions, and a direction of a magnetic attraction force generated by each magnetic attraction assembly is the same as an opening direction of a first opening slot of an adapted guide groove. Therefore, under an action of the two magnetic attraction forces, the first opening slots of the lens carrier can be in close contact with the slide rail mechanisms to abut the lens carrier against the slide rail mechanisms.

Optionally, the two magnetic attraction assemblies are respectively located on two opposite sides of the lens carrier or the frame, at least one of the first magnet and the first magnetically conductive sheet is close to one of the slide rail mechanisms, and at least one of the second magnet and the second magnetically conductive sheet is close to the other slide rail mechanism.

In the foregoing embodiment, at least one of the first magnet and the first magnetically conductive sheet is close to one slide rail mechanism, and at least one of the second magnet and the second magnetically conductive sheet is close to the other slide rail mechanism, so that the two magnetic attraction assemblies form the magnetic attraction forces in a diagonal state, and force arms of the magnetic attraction forces are increased to reduce the magnetic attraction forces. In addition, the magnetic attraction forces in the diagonal state form a rotational magnetic attraction state. A moment opposite to a moment of gravity may be formed by using the magnetic attraction forces of the two magnetic attraction assemblies to balance the moment of gravity. This well maintains structural stability. In addition, the magnetic attraction forces in the diagonal state are both close to the slide rail mechanisms and can well act on the lens carrier, so that the lens carrier can well abut against the slide rail mechanisms.

Optionally, the two magnetic attraction assemblies are respectively located on two adjacent sides of the lens carrier or the frame.

In the foregoing embodiment, because the two magnetic attraction assemblies are respectively located on the two adjacent sides of the lens carrier or the frame, a combined force of the generated magnetic attraction forces in the different directions is formed as an oblique magnetic attraction force. A magnetic attraction force of each magnetic attraction assembly cooperates with an adapted guide groove, so that a first opening slot of the guide groove is in close contact with a slide rail assembly. Therefore, on two sides of the lens carrier, the first opening slots of the lens carrier can be in close contact with the slide rail assemblies, an overall force is relatively uniform, and reliability is good, so that the lens carrier can well abut against the slide rail assemblies. In addition, because directions of the two magnetic attraction forces are perpendicular to each other, only simple force analysis may need to be performed, and moment analysis does not need to be performed. This simplifies a force analysis process, thereby simplifying a design.

Optionally, at least one of the first magnet and the first magnetically conductive sheet is close to one of the slide rail mechanisms, and at least one of the second magnet and the second magnetically conductive sheet is close to the other slide rail mechanism.

For example, at least one of the first magnet and the first magnetically conductive sheet is close to the first slide rail mechanism, and at least one of the second magnet and the second magnetically conductive sheet is close to the second slide rail mechanism.

In the foregoing embodiment, when at least one of a first magnet and a first magnetically conductive sheet of one magnetic attraction assembly (for example, the first magnetic attraction assembly) is close to one slide rail mechanism (for example, the first slide rail mechanism), a magnetic attraction force generated by the magnetic attraction assembly is close to the slide rail mechanism. When at least one of a second magnet and a second magnetically conductive sheet of the other magnetic attraction assembly (for example, the second magnetic attraction assembly) is close to the other slide rail mechanism (for example, the second slide rail mechanism), a magnetic attraction force generated by the other magnetic attraction assembly is close to the other slide rail mechanism. That is, the magnetic attraction force generated by each magnetic attraction assembly is close to the slide rail mechanism, and the magnetic attraction force under such structure may well act on the lens carrier, so that the lens carrier well abuts against the slide rail mechanisms.

Optionally, the motor further includes a first driving coil and a second driving coil. A driving force generated between the first driving coil and the first magnet enables the lens carrier to move in the z direction, and a driving force generated between the second driving coil and the second magnet enables the lens carrier to move in the z direction.

In the foregoing embodiment, the corresponding first driving coil and the corresponding second driving coil are respectively configured for the first magnet and the second magnet, so that the first magnet and the first driving coil can form the driving force in the z direction, and the second magnet and the second driving coil can form the driving force in the z direction. This effectively improves a driving force for AF, thereby improving a focusing speed of AF and imaging definition.

Optionally, both the first magnet and the second magnet are disposed on the lens carrier, and the first magnetically conductive sheet, the second magnetically conductive sheet, the first driving coil, and the second driving coil are all disposed on the frame.

In the foregoing embodiment, because both the first magnet and the second magnet may be used to generate the driving forces, the first magnet and the second magnet are mounted on the lens carrier, and the first driving coil and the second driving coil are disposed on the frame. This structural design facilitates wiring, to implement electrical connection of the driving coil.

Optionally, the motor further includes a first driver chip and a second driver chip. The first driver chip is electrically connected to the first driving coil, and the second driver chip is electrically connected to the second driver chip.

In the foregoing embodiment, the corresponding driver chips are respectively configured for the first driving coil and the second driving coil, and each driver chip cooperates with a corresponding driving coil, so that utilization of magnet energy can be maximized, and double the driving force used for AF can be provided.

Optionally, the second magnet is disposed on the frame, and the second magnetically conductive sheet is disposed on the lens carrier. The motor further includes a third driving coil disposed on the frame. A driving force generated between the third driving coil and the second magnet enables the frame to drive the lens carrier to move in a first direction, and the first direction is perpendicular to the z direction.

It should be understood that the first direction may be an x direction or a y direction. Movement, driven by the lens carrier, of the lens in the x direction or the y direction can implement an image stabilization function, and the second magnet may be a magnet used for image stabilization.

In an embodiment in which the two magnetic attraction assemblies are respectively located on the two opposite sides of the lens carrier or the frame, if the first magnet is disposed on an opposite side of the second magnet used to generate a driving force in the y direction, the first direction is the y direction; or if the first magnet is disposed on an opposite side of the second magnet used to generate a driving force in the x direction, the first direction is the x direction.

In an embodiment in which the two magnetic attraction assemblies are respectively located on the two adjacent sides of the lens carrier or the frame, if the first magnet is disposed adjacent to the second magnet used to generate a driving force in the y direction, the first direction is the x direction; or if the first magnet is disposed adjacent to the second magnet used to generate a driving force in the x direction, the first direction is the y direction.

In the foregoing embodiment, in an embodiment in which the motor has both an AF function and the image stabilization function, the second magnet, in the motor, that can generate the y direction or the x direction is used to cooperate with the second magnetically conductive sheet to generate the magnetic attraction force. Because no additional magnet needs to be added, space occupation is reduced, and costs are reduced.

Optionally, the two guide grooves include a first guide groove and a second guide groove. The two slide rail mechanisms include a first slide rail mechanism and a second slide rail mechanism. The first guide groove accommodates the first slide rail mechanism, and the second guide groove accommodates the second slide rail mechanism. The magnetic attraction mechanism includes one magnetic attraction assembly located on one side of the lens carrier. A direction of the magnetic attraction force generated by the magnetic attraction mechanism is the same as an opening direction of a first opening slot of the first guide groove. The magnetic attraction mechanism includes a first magnet and a first magnetically conductive sheet. One of the first magnet and the first magnetically conductive sheet is disposed on the lens carrier, and the other one of the first magnet and the first magnetically conductive sheet is disposed on the frame. In addition, a limiting structure is formed on the frame, the limiting structure and the magnetic attraction mechanism are respectively located on two opposite sides of the lens carrier, and the limiting structure is configured to restrict the lens carrier from shaking in a direction close to the magnetic attraction mechanism.

In the foregoing embodiment, the magnetic attraction mechanism generates a single-sided magnetic attraction force. To avoid a problem, caused by single-sided magnetic attraction, that the lens carrier moves in the direction close to the magnetic attraction mechanism to cause poor contact between the lens carrier and the slide rail mechanisms, the limiting structure is disposed on one side opposite to the magnetic attraction mechanism. This can restrict the lens carrier from shaking in the direction close to the magnetic attraction mechanism, so that close contact between the slide rail mechanisms and the lens carrier is maintained as much as possible, and the lens carrier abuts against the slide rail mechanisms as much as possible. In addition, because a force of single-sided magnetic attraction is simple, only simple force analysis may need to be performed, and moment analysis does not need to be performed. This simplifies a force analysis process, thereby simplifying a design.

Optionally, the limiting structure is disposed adjacent to the second slide rail mechanism.

In the foregoing embodiment, the magnetic attraction mechanism is adapted to the first guide groove and can well act on the first sliding mechanism accommodated in the first guide groove. The limiting structure is disposed opposite to the magnetic attraction mechanism, and the limiting structure acts on the second sliding mechanism. When the limiting structure is disposed adjacent to the second sliding structure, a force, provided by the limiting structure, whose direction is opposite to a direction of the magnetic attraction force can well act on the second slide rail mechanism and perform limiting. In combination with the magnetic attraction force, close contact between the two slide rail mechanisms and the lens carrier can be well maintained, so that the lens carrier well abuts against the slide rail mechanisms, and the structure is more stable.

Optionally, a slot is formed at a position, of the lens carrier, adjacent to the second slide rail mechanism. The slot communicates with a first opening slot of the second guide groove. An extension direction of the slot is perpendicular to an opening direction of the first opening slot. The limiting structure is inserted into the slot, and a second opening slot of the second guide groove is formed on the limiting structure.

In the foregoing embodiment, the limiting structure and the lens carrier jointly form the first guide groove. The slot for the limiting structure to insert into communicates with the first opening slot of the first guide groove. This structure in which the first guide groove and the limiting structure are integrated has a compact layout and avoids occupation of large space. In addition, the force, provided by the limiting structure, whose direction is opposite to the direction of the magnetic attraction force can better act on the slide rail mechanism and perform limiting. In combination with the magnetic attraction force, close contact between the two slide rail mechanisms and the lens carrier can be well maintained, so that the lens carrier better abuts against the slide rail mechanisms, and the structure is more stable.

Optionally, the first magnet is disposed on the lens carrier. The motor further includes a first driving coil disposed on the frame. The first driving coil is disposed on the frame. A driving force generated between the first driving coil and the first magnet enables the lens carrier to move in the z direction.

In the foregoing embodiment, because the motor in this embodiment of this application is used for AF, and the motor has a magnet that can generate a driving force for AF, the magnet in the motor may be reused as the first magnet used to generate the magnetic attraction force, so that space occupation is reduced, and costs are reduced. In addition, a structural design in which the first magnet is disposed on the lens carrier and the first driving coil is disposed on the frame facilitates wiring, to implement electrical connection of the driving coil.

Optionally, the motor further includes a third magnetically conductive sheet disposed on the lens carrier to attract the first magnet to the lens carrier. The third magnetically conductive sheet and the first magnetically conductive sheet are respectively located on two sides of the first magnet.

In the foregoing embodiment, the third magnetically conductive sheet can increase a magnetic force of the first magnet and can also serve as an effective means for reducing magnetic leakage of the magnet. Finally, magnetic field strength is strengthened, and a driving force of the motor is improved. The third magnetically conductive sheet further facilitates better attraction of the first magnet to the lens carrier, and the magnet does not easily fall off from the lens carrier. In addition, the third magnetically conductive sheet may be used as a support member of the lens carrier, to improve strength of the lens carrier and make the lens carrier less prone to deformation.

According to a second aspect, a camera module is provided and includes a lens and the motor according to any one of the possible implementations of the first aspect.

According to a third aspect, an electronic device is provided and includes the camera module according to the second aspect.

**BRIEF DESCRIPTION OF THE DRAWINGS**

FIG. 1 is a diagram of a structure of an electronic device according to an embodiment of this application;
FIG. 2 is a diagram of a camera module according to an embodiment of this application;
FIG. 3 is a diagram of a structure of a motor in the conventional technology according to an embodiment of this application;
FIG. 4 is a cross-sectional view of FIG. 3 from a perspective of A-A;
FIG. 5 is an exploded view of a motor according to an embodiment of this application;
FIG. 6 is another exploded view of a motor according to an embodiment of this application;
FIG. 7 is still another exploded view of a motor according to an embodiment of this application;

FIG. 8 is a diagram of a structure of a motor with a housing and slide rail mechanisms removed according to an embodiment of this application;

FIG. 9 is a diagram of a structure of a motor with a housing removed according to an embodiment of this application;

FIG. 10 is an exploded view of another structure of a motor according to an embodiment of this application;

FIG. 11 is a diagram of a structure of a motor with a housing and slide rail mechanisms removed according to an embodiment of this application;

FIG. 12 is a diagram of a structure of a motor with a housing removed according to an embodiment of this application;

FIG. 13 is a diagram of another structure of a motor according to an embodiment of this application;

FIG. 14 is an exploded view of another structure of a motor according to an embodiment of this application;

FIG. 15 is a diagram of a structure of a motor with a housing and slide rail mechanisms removed according to an embodiment of this application;

FIG. 16 is a diagram of a structure of a motor with a housing removed according to an embodiment of this application;

FIG. 17 is a diagram of a structure of a lens carrier according to an embodiment of this application; and

FIG. 18 is a diagram of a structure of a frame according to an embodiment of this application.

## DESCRIPTION OF EMBODIMENTS

The following describes technical solutions of this application with reference to accompanying drawings.

An electronic device in an embodiment of this application may be any device with a photographing or video recording function. For example, the electronic device may be a mobile phone, a tablet computer, a driving recorder, a security monitor, a video camera, a video recorder, a camera, an intelligent robot, or another form of device with a photographing or video recording function.

Next, for ease of description, a width direction of the electronic device is defined as an x direction, a length direction of the electronic device is defined as a y direction, and a thickness direction of the electronic device is defined as a z direction. The x direction, the y direction, and the z direction are perpendicular to each other. The x direction and the y direction form an xy plane, the x direction and the z direction form an xz plane, and the y direction and the z direction form a yz plane. The z direction is parallel to an optical axis direction of a lens in the electronic device.

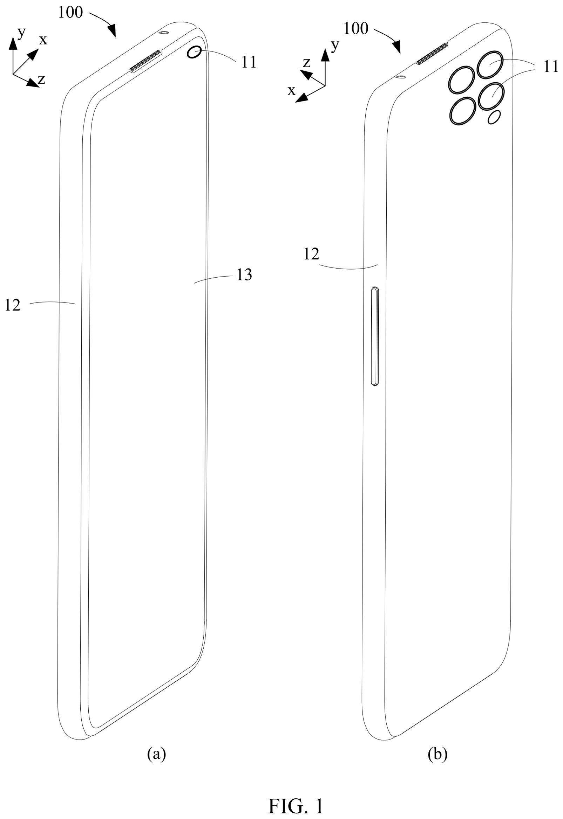

FIG. 1 is a diagram of a structure of an electronic device according to an embodiment of this application. (a) in FIG. 1 and (b) in FIG. 1 are diagrams of a structure of the electronic device from two perspectives.

With reference to FIG. 1, the electronic device 100 includes a housing 12 and a camera module 11, and the camera module 11 is mounted inside the housing 12.

In an example, the camera module 11 may be used for a front-facing camera. On a front surface of the electronic device 100 shown in (a) in FIG. 1, the camera module 11 is used for a front-facing camera. In another example, the camera module 11 may be used for a rear-facing camera. On a back surface of the electronic device 100 shown in (b) in FIG. 1, the camera module 11 is used for a rear-facing camera.

A quantity of camera modules 11 is not limited to one, and may alternatively be two or more. For example, as shown in (b) in FIG. 1, four camera modules 11 are mounted on the back surface of the electronic device 100.

The electronic device 100 further includes a camera decorating part (Deco). To prevent an appearance of the electronic device 100 from being affected and protect a camera, the camera decorating part is a hollow shell-like decorating part made of a metal material or a plastic material.

The electronic device 100 further includes a processor. The processor and the camera module 11 are disposed in the housing 12. The camera module 11 is configured to obtain image data and input the image data into the processor, and the processor is configured to process the image data.

The electronic device further includes a display 13. The display 13 is mounted on the housing 12. Accommodating space is formed in the housing 12. The processor and the camera module 11 may be mounted in the accommodating space. The display 13 is electrically connected to the processor. The display 13 can display an image or a video after image processing performed by the processor.

It should be understood that the housing 12 may further include another device, such as a battery, a flash, a fingerprint recognition module, an earpiece, and a sensor, but this is not limited thereto.

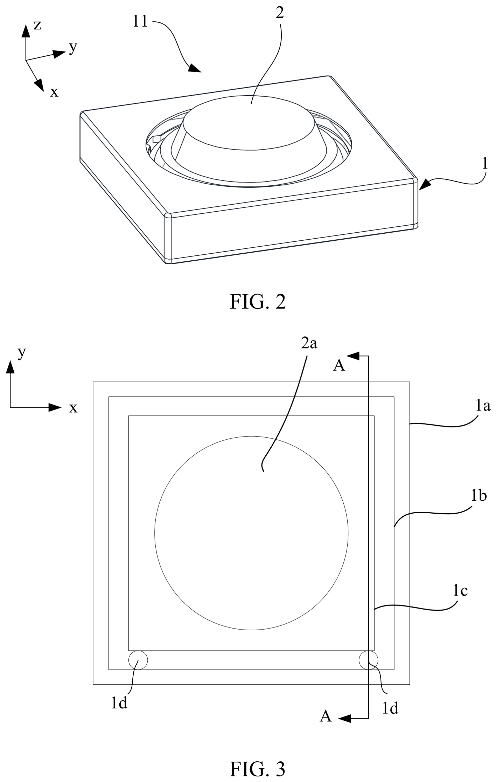

FIG. 2 is a diagram of the camera module according to an embodiment of this application. A motor 1 and a lens 2 are configured in the camera module 11. The motor 1 generally has an autofocus (autofocus, AF) function. In the AF function, the lens 2 in the camera module 11 is driven, by using a driving force provided by the motor 1, to move in an optical axis direction of the lens 2, to implement the AF function. It should be noted that the optical axis direction of the lens 2 is the z direction. This is explained below, and details are not described again.

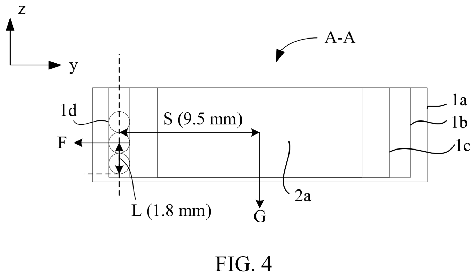

FIG. 3 is a diagram of a structure of a motor in the conventional technology according to an embodiment of this application. FIG. 4 is a cross-sectional view of FIG. 3 from a perspective of A-A.

With reference to FIG. 3 and FIG. 4, the motor includes a base 1a, a frame 1b, and a lens carrier 1c. The lens carrier 1c is configured to mount a lens. The lens carrier 1c is sleeved in the frame 1b. The lens carrier 1c can move in an optical axis direction (z direction) of a lens relative to the frame 1b and the base 1a under an action of a magnetic field. To reduce resistance during movement, a ball 1d is disposed between the lens carrier 1c and the frame 1b, to reduce a friction force. In addition, a magnetic attraction structure (not shown in the figure) is further disposed on a same side on which the ball 1d is disposed. A magnetic attraction force generated by the magnetic attraction structure enables the lens carrier 1c to abut against the ball 1d as much as possible, to maintain structural stability as much as possible and maximize utilization of contact between the ball 1d and the lens carrier 1c to reduce the friction force.

After the motor cooperates with the lens, a weight of a mover including the lens carrier 1c and the lens is increased, and in a posture shown in FIG. 4, stability of the motor of the foregoing structure is the worst. Under an action of gravity of the mover, the lens carrier 1c easily flips clockwise in an orientation shown in the figure, and this posture needs a maximum magnetic attraction force compared with another posture. Therefore, the magnetic attraction force needed in the posture is used as a design reference.

FIG. 4 also shows a force analysis of the motor in this posture. The gravity of the mover including the lens carrier 1c and the lens is denoted as G, $G=Wg$, W is mass of the mover, a force arm of the mover is denoted as S, and a force arm of the magnetic attraction force F is denoted L. To enable the lens carrier 1c to abut against the ball 1d as much as possible, the following condition needs to be met: $F \times L > Wg \times S$. It can be learned from the figure that, in this posture, the force arm L of the magnetic attraction force F is very small. Consequently, a large magnetic attraction force F is needed. For an upright motor, an appearance of the motor is flat. S is several times of L. Therefore, the needed magnetic attraction force F is at least several times greater than Wg.

In conclusion, because of the foregoing structure, a large magnetic attraction force is needed. In this case, the large magnetic attraction force causes an increase of a friction force during movement of the mover, and a driving force also increases with the friction force. Consequently, power consumption and costs are increased. In addition, this facilitates a miniaturization design of the motor, and increases overall design difficulty.

To resolve the foregoing problem, an embodiment of this application provides a new motor. The motor includes a magnetic attraction mechanism and two slide rail mechanisms. The two slide rail mechanisms are diagonally disposed between a frame and a lens carrier on a plane perpendicular to an optical axis direction of a lens and are configured to provide sliding support surfaces for movement of the lens carrier in the optical axis direction to reduce a friction force. A magnetic attraction force generated by the magnetic attraction mechanism is used to abut the lens carrier against the slide rail mechanisms. Because the two slide rail mechanisms are diagonally disposed, structural distribution is uniform, and during movement, the lens carrier interacts with the slide rail mechanisms at diagonal positions, so that an overall force on the lens carrier becomes uniform. This facilitates structural stability. Compared with a ball-type motor in the conventional technology in which a ball is disposed on one side, for the motor having the slide rail mechanisms that are diagonally disposed in this application, the structure with good stability can avoid a phenomenon that the motor may undergo large-scale flipping in any state. Therefore, the needed magnetic attraction force is decreased, that is, the lens carrier may be in good contact with the slide rail mechanisms by using a small magnetic attraction force, so that the lens carrier well abuts against the slide rail mechanisms. This reduces a driving force needed in autofocus, reduces power consumption and costs, facilitates a miniaturization design of the motor, and effectively simplifies overall design difficulty.

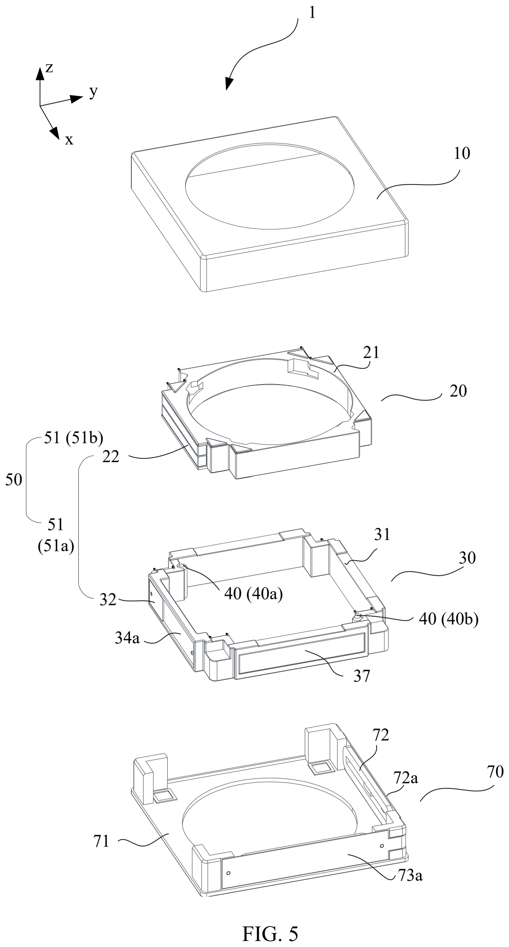

The following specifically describes the motor provided in an embodiment of this application with reference to FIG. 5 to FIG. 18.

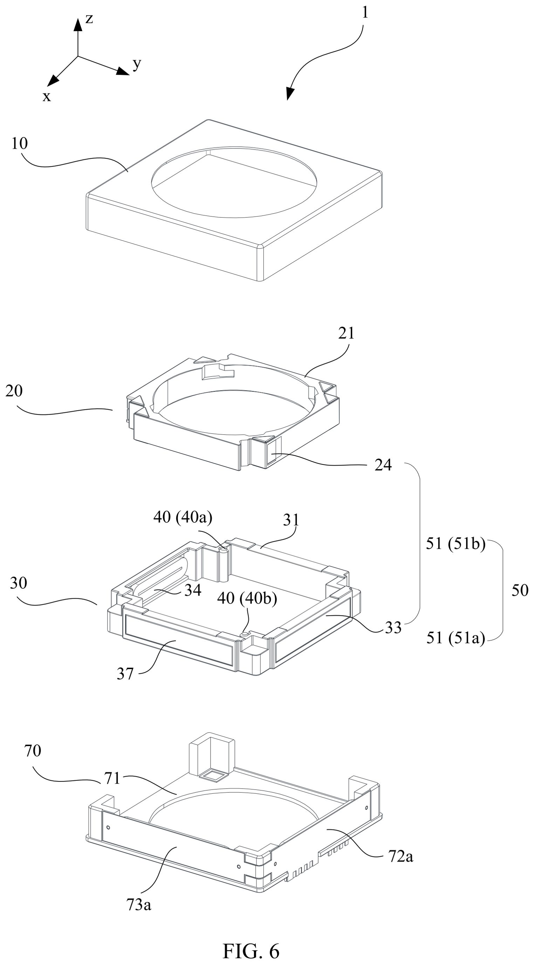

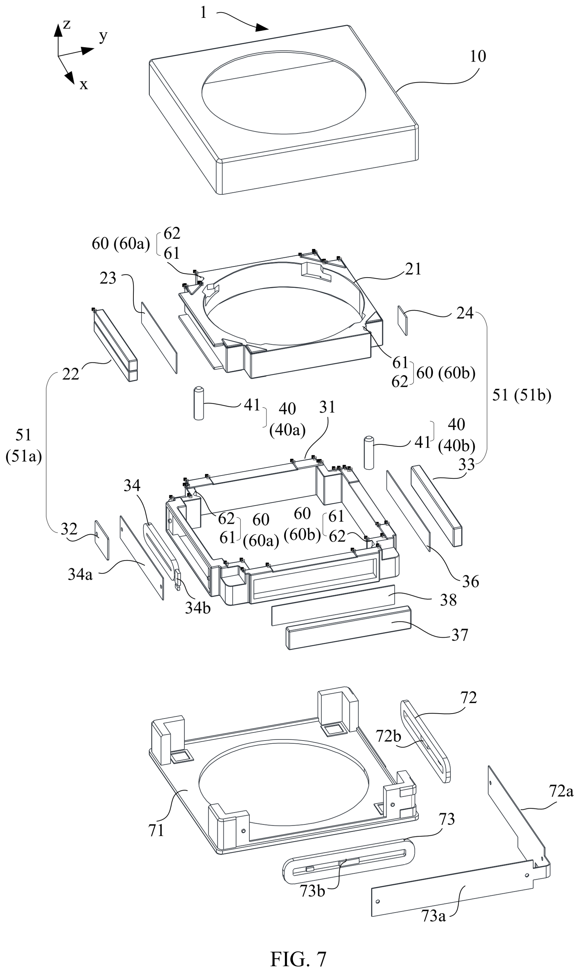

FIG. 5 is an exploded view of the motor according to an embodiment of this application. FIG. 6 is another exploded view of the motor according to an embodiment of this application. FIG. 7 is still another exploded view of the motor according to an embodiment of this application.

With reference to FIG. 5 to FIG. 7, a motor 1 includes a housing 10, a lens carrier 21, a frame 31, a magnetic attraction mechanism 50, and two slide rail mechanisms 40.

Accommodating space is formed in the housing 10, and the accommodating space accommodates the lens carrier 21, the frame 31, the magnetic attraction mechanism 50, and the two slide rail mechanisms 40.

For example, the lens carrier 21 is sleeved inside the frame 31, and the lens carrier 21 is configured to mount the lens. A driving force of the motor 1 drives the lens carrier 21 to move in a z direction (parallel to an optical axis direction of the lens), to implement an AF function. One part of the magnetic attraction mechanism 50 is mounted on the lens carrier 21 and works together with the other part of the magnetic attraction mechanism 50 mounted on the frame 31 to generate an attraction function.

For example, the frame 31 is sleeved on an outer side of the lens carrier 21, circumferentially encloses the lens carrier 21, and may limit the lens carrier 21 in an xy plane. The other part of the magnetic attraction mechanism 50 is mounted on the frame 31.

It should be understood that, to reduce a friction force between the lens carrier 21 and the frame 31 during movement, a clearance fit is formed between the lens carrier 21 and the frame 31.

The slide rail mechanisms 40 are configured to provide sliding support surfaces for movement of the lens carrier 21 in the z direction. During focusing, the lens carrier 21 moves in the z direction relative to the frame 31 and the slide rail mechanisms 40, and the lens carrier 21 is in slide contact with the slide rail mechanisms 40, to further reduce the friction force during movement.

The two slide rail mechanisms 40 are diagonally disposed on an inner side of the frame 31 on a first plane perpendicular to the z direction and may provide the sliding support surfaces for the lens carrier 21 at diagonal positions, so that an overall force on the lens carrier 21 becomes uniform. This facilitates structural stability. The two slide rail mechanisms 40 are diagonally disposed. It may be understood that the two slide rail mechanisms 40 are disposed at two opposite corners of four corners of the frame 31.

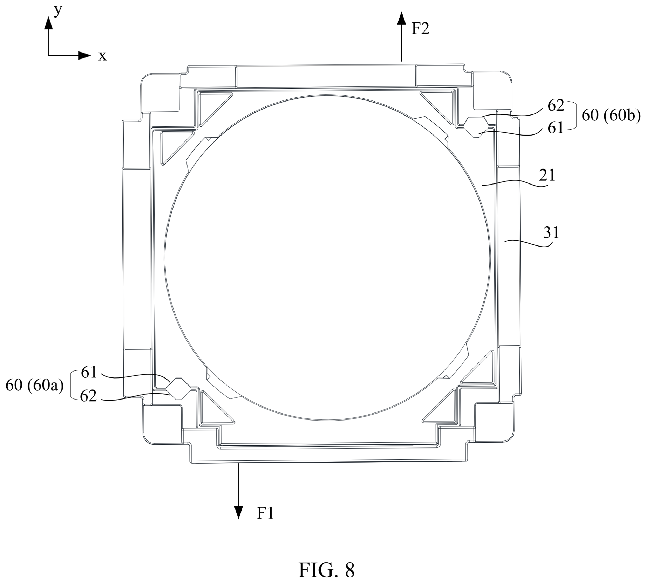

FIG. 8 is a diagram of a structure of the motor with the housing and the slide rail mechanisms removed according to an embodiment of this application.

With reference to FIG. 7 and FIG. 8, two guide grooves 60 are formed between the lens carrier 21 and the frame 31. The two guide grooves 60 corresponds to the two slide rail mechanisms 40. One guide groove 60 accommodates a corresponding slide rail mechanism 40. The guide groove 60 includes a first opening slot 61 disposed on the lens carrier 21 and a second opening slot 62 disposed on the frame. For ease of description, the two guide grooves 60 are respectively denoted as a guide groove 60a and a guide groove 60b. The two slide rail mechanisms 40 are denoted as a slide rail mechanism 40a and a slide rail mechanism 40b. In this case, the guide groove 60a accommodates the slide rail mechanism 40a, and the guide groove 60b accommodates the slide rail mechanism 40b.

One part of the magnetic attraction mechanism 50 is disposed on the lens carrier 21, and the other part of the magnetic attraction mechanism 50 is disposed on the frame 31. A magnetic attraction force pointing to the housing 10 (that is, an outward magnetic attraction force) is generated between the two parts, so that the lens carrier 21 is close to one side of the frame 31. When the lens carrier 21 is close to one side of the frame 31, the lens carrier 21 (slot walls of the first opening slots 61 of the guide grooves 60) may abut against the slide rail mechanisms 40, that is, the lens carrier 21 may keep in constant contact with the slide rail mechanisms 40, to maintain structural stability as much as possible and maximize utilization of contact between the slide rail mechanisms 40 and the lens carrier 21 to reduce the friction force.

In this embodiment of this application, the magnetic attraction mechanism may include one or more magnetic attraction assemblies. Each magnetic attraction assembly generates a magnetic attraction force in one direction. When there are a plurality of magnetic attraction assemblies, the plurality of magnetic attraction assemblies generate magnetic attraction forces in different directions. The lens carrier 21 abuts against the slide rail mechanisms 40 by using the magnetic attraction forces in the directions, to better maintain structural stability. The following specifically describes the magnetic attraction mechanism by using a plurality of structures. Details are not described herein again.

In the foregoing embodiment, the motor includes the two slide rail mechanisms 40 that are disposed diagonally, so that the lens carrier 21 interacts with the slide rail mechanisms 40 at the diagonal positions. In this way, an overall force on the lens carrier 21 becomes uniform. This facilitates structural stability. Compared with a ball-type motor in the conventional technology in which a ball is disposed on one side, a motor structure with good stability in this application can avoid a phenomenon that the motor may undergo large-scale flipping in any state. Therefore, a needed magnetic attraction force is decreased, that is, the lens carrier 21 may be in good contact with the slide rail mechanisms 40 by using a small magnetic attraction force, so that the lens carrier 21 well abuts against the slide rail mechanisms 40. This reduces a driving force needed in autofocus, reduces power consumption and costs, improves a focusing speed, facilitates a miniaturization design of the motor, and effectively simplifies overall design difficulty.

It should be noted that because stability of the motor is different in different postures, the magnetic attraction forces needed in the postures may not be the same. Generally, the motor needs a maximum magnetic attraction force in a posture with worst stability. Therefore, when the magnetic attraction mechanism is designed, the magnetic attraction force needed by the motor in the posture with worst stability is generally used as a design reference. It may be understood that, when the magnetic attraction force in the posture with worst stability meets a requirement, a magnetic attraction force in another posture necessarily meets the requirement.

For ease of description and ease of viewing the figure, in this embodiment of this application, a structure including the lens carrier 21 and components (for example, components such as a magnet 22, a magnetically conductive sheet 23, and a magnetically conductive sheet 24) mounted on the lens carrier 21 is referred to as a carrier assembly 20 for short, and a mechanism including the frame 31 and components (for example, components such as a magnetically conductive sheet 32, a magnet 33, a magnetically conductive sheet 36, a magnet 37, and a magnetically conductive sheet 38) mounted on the frame 31 is referred to as a frame assembly 30 for short.

The slide rail mechanism 40 of the motor in this embodiment of this application may be any form of a structure that can provide the sliding support surface. This is not limited.

In some embodiments, the slide rail mechanism 40 may include at least one ball (not shown in the figure). When there are a plurality of balls, the plurality of balls are arranged in the z direction. The ball is accommodated in the guide groove 60, and under an action of the magnetic attraction force, the ball is in close contact with the guide groove 60. Because the ball is in rolling contact with a groove wall of the guide groove 60, and a contact area is small, a dent is formed on the guide groove 60 when a large extrusion force is applied. This is not conducive to smooth rolling of the ball, further affects movement of the lens carrier 21 and the lens in the z direction, and reduces the focusing speed.

Based on this, in some other embodiments, with reference to FIG. 7, the slide rail mechanism 40 includes a guide post 41. The guide post 41 extends in the z direction and is of a columnar structure.

Because the guide post 41 is in surface contact or line contact with the lens carrier 21, and the guide post 41 is in surface contact or line contact with the frame 31, a contact area between the guide post 41 and the lens carrier 21 (the first opening slot 61 of the lens carrier 21) and a contact area between the guide post 41 and the frame 31 (the second opening slot 62 of the frame 31) can both be increased, so that a large extrusion force can be withstood. This avoids formation of dents on the lens carrier 21 and the frame 31 due to impact, and facilitates movement of the lens carrier 21 and the lens in the z direction, thereby improving the focusing speed. This is very applicable to a scenario involving a heavy lens. In addition, the guide post 41 extends in the z direction to form a columnar structure, and an outer surface of the guide post 41 is used as a guide surface. This helps well guide movement of the lens carrier 21 in the z direction. In this way, the lens carrier 21 is not prone to tilting, thereby further improving structural stability.

For example, a cross section of the guide post 41 may be circular or elliptical, and the cross section of the guide post 41 is perpendicular to a length direction of the guide post 41. When the cross section of the guide post 41 is circular, the guide surface is a cylindrical surface.

In this embodiment, a relationship among the guide post 41, the lens carrier 21, and the frame 31 may include three cases.

Case 1

When the guide post 41 is fastened to the lens carrier 21, the guide post 41 is in line contact with the frame 31. The guide post 41 and the lens carrier 21 may be fastened through bonding or adhesive bonding, or the guide post 41 and the lens carrier 21 are fastened by using an integrated molding process. In this way, because the guide post 41 is in line contact with the frame 31, friction can be reduced, and contact between the guide post 41 and the frame 31 can be increased, to avoid the formation of the dents on the lens carrier 21 and the frame 31 due to impact.

Case 2

When the guide post 41 is fastened to the frame 31, the guide post 41 is in line contact with the frame 31. The guide post 41 and the frame 31 may be fastened through bonding or adhesive bonding, or the guide post 41 and the lens carrier 21 are fastened by using an integrated molding process. In this way, because the guide post 41 is in line contact with the lens carrier 21, friction can be reduced, and contact between the guide post 41 and the lens carrier 21 can be increased, to avoid the formation of the dents on the lens carrier 21 and the frame 31 due to impact.

Case 3

Neither the frame 31 nor the lens carrier 21 is fastened to the guide post 41. The guide post 41 is in line contact with the frame 31. The guide post 41 is in line contact with the lens carrier 21. Because the line contact is used, friction can be reduced, and the formation of the dents on the lens carrier 21 and the frame 31 due to impact is avoided. In this case, two opposite ends of the guide post 41 may respectively abut against the frame 31 (or a base 71) and the housing 10, so that the guide post 41 does not move relative to the frame 31 (or the base 71) and the housing 10 in the z direction.

In some other embodiments, the slide rail mechanism 40 may alternatively be a combination of the guide post and the ball, that is, the slide rail mechanism 40 includes the guide post and the ball. The guide groove 60 accommodates the guide post and the ball, the ball is in contact with the guide post, and rolling directions are the same.

In some embodiments, the magnetic attraction mechanism 50 includes two magnetic attraction assemblies 51. The two magnetic attraction assemblies 51 are respectively located on two sides of the lens carrier 21 or the frame 31, and the two magnetic attraction assemblies 51 are configured to generate magnetic attraction forces in different directions. One magnetic attraction assembly 51 includes a first magnet and a first magnetically conductive sheet disposed corresponding to the first magnet. The other magnetic attraction assembly 51 includes a second magnet and a second magnetically conductive sheet disposed corresponding to the second magnet. One of the first magnet and the first magnetically conductive sheet is disposed on the lens carrier 21, and the other one of the first magnet and the first magnetically conductive sheet is disposed on the frame 31. One of the second magnet and the second magnetically conductive sheet is disposed on the lens carrier 21, and the other one of the second magnet and the second magnetically conductive sheet is disposed on the frame 31.

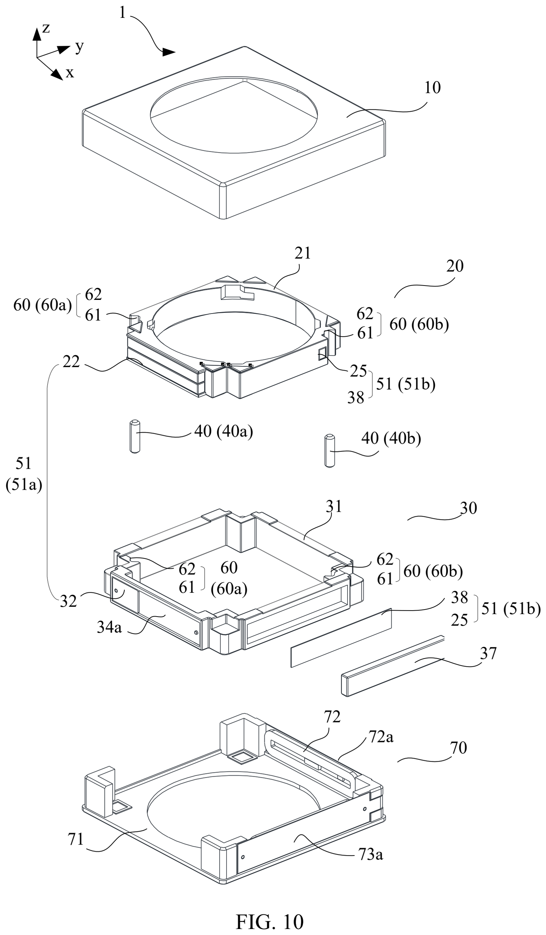

In an example, the two magnetic attraction assemblies 51 are respectively located on two opposite sides of the lens carrier 21 or the frame 31, as shown in FIG. 5 to FIG. 9. In another example, the two magnetic attraction assemblies 51 are respectively located on two adjacent sides of the lens carrier 21 or the frame 31, as shown in FIG. 10 to FIG. 13.

The following first specifically describes the motor in a case in which the two magnetic attraction assemblies 51 are respectively disposed on the two opposite sides of the lens carrier 21 or the frame 31. Subsequently, the motor in a case in which the two magnetic attraction assemblies 51 are disposed on the two adjacent sides of the lens carrier 21 or the frame 31 is specifically described. In addition, for ease of description, the two magnetic attraction assemblies 51 are respectively denoted as a magnetic attraction assembly 51a and a magnetic attraction assembly 51b.

With reference to FIG. 5 to FIG. 7, the magnetic attraction assembly 51a includes the magnet 22 and the magnetically conductive sheet 32, and the magnetic attraction assembly 51b includes the magnet 33 and the magnetically conductive sheet 24. Herein, the magnet 22 may be the foregoing first magnet, the magnetically conductive sheet 32 may be the first magnetically conductive sheet, the magnet 33 may be the second magnet, and the magnetically conductive sheet 24 may be the second magnetically conductive sheet.

In an example, the magnet 22 is disposed on the lens carrier 21, and the magnetically conductive sheet 32 is disposed on the frame 31. In another example (not shown in the figure), the magnetically conductive sheet 32 is disposed on the lens carrier 21, and the magnet 22 is disposed on the frame 31.

In an example, the magnetically conductive sheet 24 is disposed on the lens carrier 21, and the magnet 33 is disposed on the frame 31. In another example (not shown in the figure), the magnet 33 is disposed on the lens carrier 21, and the magnetically conductive sheet 24 is disposed on the frame 31.

With reference to FIG. 7 and FIG. 8, the two magnetic attraction assemblies 51 are respectively adapted to the two guide grooves 60. A direction of a magnetic attraction force generated by the magnetic attraction assembly 51 is the same as an opening direction of a first opening slot 61 of an adapted guide groove 60. Specifically, as shown in FIG. 8, a direction of a magnetic attraction force F1 generated by the magnetic attraction assembly 51a is the same as an opening direction of a first opening slot 61 of the guide groove 60a, and both are in a downward direction of a y direction. A direction of a magnetic attraction force F2 generated by the magnetic attraction assembly 51b is the same as an opening direction of a first opening slot 61 of the guide groove 60b, and both are in an upward direction of the y direction. In this way, under an action of the magnetic attraction force F1 and the magnetic attraction force F2, the first opening slots 61 of the lens carrier 21 can be in close contact with the slide rail mechanisms 40 to abut the lens carrier 21 against the slide rail mechanisms 40.

In some embodiments, with reference to FIG. 5 and FIG. 6, at least one of the magnet 22 and the magnetically conductive sheet 32 in the magnetic attraction assembly 51a is close to one slide rail mechanism 40 (for example, the slide rail mechanism 40a), and at least one of the magnet 33 and the magnetically conductive sheet 24 in the magnetic attraction assembly 51b is close to the other slide rail mechanism 40 (for example, the slide rail mechanism 40b).

It should be understood that, that at least one of the magnet 22 and the magnetically conductive sheet 32 in the magnetic attraction assembly 51a is close to the slide rail mechanism 40a indicates that at least one component is close to the slide rail mechanism 40a in an x direction, and that at least one of the magnet 33 and the magnetically conductive sheet 24 in the magnetic attraction assembly 51b is close to the slide rail mechanism 40b also indicates that at least one component is close to the slide rail mechanism 40b in the x direction.

In the foregoing embodiment, when at least one of the magnet 22 and the magnetically conductive sheet 32 is close to the slide rail mechanism 40a, the magnetic attraction force generated by the magnetic attraction assembly 51a is close to the slide rail mechanism 40a. When at least one of the magnet 33 and the magnetically conductive sheet 24 is close to the slide rail mechanism 40b, the magnetic attraction force generated by the magnetic attraction assembly 51b is close to the slide rail mechanism 40b. The magnetic attraction assembly 51a and the magnetic attraction assembly 51b form magnetic attraction forces in a diagonal state as shown in FIG. 8, to form a rotational magnetic attraction structure. The magnetic attraction forces in the diagonal state are both close to the slide rail mechanisms 40 and can well act on the lens carrier 21, so that the lens carrier 21 can well abut against the slide rail mechanisms 40.

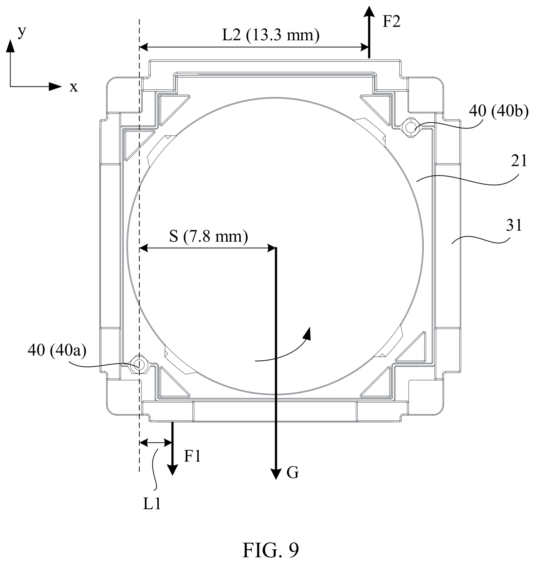

FIG. 9 is a diagram of a structure of the motor with the housing removed according to an embodiment of this application. It should be noted that, for the motor having the slide rail mechanisms that are diagonally disposed in this application, the motor in a posture shown in FIG. 9 has poor stability. Therefore, a magnetic attraction force in the posture is used for analysis.

With reference to FIG. 9, it is assumed that gravity of a mover including the lens carrier 21 and the lens is denoted as G, G=Wg, W is mass of the mover, a force arm of the mover is denoted as S, a force arm of the magnetic attraction force F1 generated by the magnetic attraction assembly 51a is denoted as L1, and a force arm of the magnetic attraction force F2 generated by the magnetic attraction assembly 51b is denoted as L2.

In this structure, the lens carrier 21 generates a clockwise moment under an action of the gravity, and tends to rotate clockwise. A counterclockwise moment (as shown by using an arrow in the figure) can be generated by using a combined magnetic attraction force of the magnetic attraction force F1 and the magnetic attraction force F2, so that the moment generated due to the gravity can be balanced, to maintain structural stability. In addition, it can be learned that the force arm L2 of the magnetic attraction force F2 is obviously smaller than the force arm S of the gravity, and the magnetic attraction force F2 is much smaller than that in the conventional technology. For the force arm L1 of the magnetic attraction force F1, because F1 and the gravity G are in the same direction, the smaller the force arm L1, the better.

When the magnetic attraction force is designed, because stability of the motor in different postures needs to be considered, for ease of design, the magnetic attraction forces generated by the two magnetic attraction assemblies are designed to be as similar as possible.

Through comparison and analysis with reference to FIG. 4 and FIG. 9, in a case of a same weight W of the mover, in FIG. 4, S is approximately 9.5 mm, and L is approximately 1.8 mm. A needed magnetic attraction force F>9 .5/1.8* 5*W=26.4 W, and the magnetic attraction force is approximately 26 times the weight of the mover. In FIG. 9, S is approximately 7.8 mm, and L2 is approximately 13.3 mm. In this case, a needed magnetic attraction force F>7.8/13.3*5*W=2.9 W. It can be learned that the magnetic attraction forces of the two structures differ by approximately 26.4/2.9=9.1 times. In other words, the magnetic attraction force needed by the motor in this embodiment of this application is 1/9 of a magnetic attraction force of a motor in the conventional technology, and a friction force also becomes 1/9 of a friction force in the conventional technology. If a magnetic restoring force is not considered, a design requirement for the driving force needed by the motor is reduced by approximately 9 times, thereby greatly reducing design difficulty.

In the foregoing embodiment, at least one of the magnet 22 and the magnetically conductive sheet 32 is close to the slide rail mechanism 40a, and at least one of the magnet 33 and the magnetically conductive sheet 24 is close to the slide rail mechanism 40b, so that the two magnetic attraction assemblies 51 form the magnetic attraction forces in the diagonal state, thereby increasing the force arms of the magnetic attraction forces to reduce the magnetic attraction forces. The magnetic attraction forces in the diagonal state form a rotational magnetic attraction state. A moment opposite to the moment of the gravity can be formed by using the magnetic attraction forces of the two magnetic attraction assemblies 51 to balance the moment of the gravity. This well maintains structural stability. In addition, the magnetic attraction forces in the diagonal state are both close to the slide rail mechanisms 40 and can well act on the lens carrier 21, so that the lens carrier 21 can well abut against the slide rail mechanisms 40.

Because the motor in this embodiment of this application is used for AF, and the motor has a magnet and a driving coil that are used to generate a driving force in the z direction, to reduce space occupation and costs, in some embodiments, the magnet in the motor for generating the driving force in the z direction may be reused as the magnet used to generate the magnetic attraction force in this application.

With reference to FIG. 7, the motor includes a driving coil 34. A driving force generated between the driving coil 34 and the magnet 22 enables the lens carrier 21 to drive the lens to move in the z direction.

In an embodiment in which the magnet 22 is further used to generate the driving force, for example, the magnet 22 is disposed on the lens carrier 21, the magnetically conductive sheet 32 is disposed on the frame 31, and the driving coil 34 is disposed on the frame 31. This structural design facilitates wiring, to implement wire connection of the driving coil.

A circuit board 34a and a driver chip 34b that correspond to the driving coil 34 are further disposed on the frame 31, and both the driving coil 34 and the driver chip 34b are electrically connected to the circuit board 34a.

For example, with reference to FIG. 7, the motor further includes the magnetically conductive sheet 23 disposed on the lens carrier 21 to attract the magnet 22 to the lens carrier 21. The magnetically conductive sheet 23 and the magnetically conductive sheet 32 are respectively located on two sides of the magnet 22.

In the foregoing embodiment, the magnetically conductive sheet 23 can increase a magnetic force of the magnet 22 and can also serve as an effective means for reducing magnetic leakage of the magnet. Finally, magnetic field strength is strengthened, and the driving force of the motor is improved. The magnetically conductive sheet 23 further facilitates better attraction of the magnet 22 to the lens carrier 21, and the magnet 22 does not easily fall off from the lens carrier 21. In addition, the magnetically conductive sheet 23 may be used as a support member of the lens carrier 21, to improve strength of the lens carrier and make the lens carrier less prone to deformation.

In some embodiments, the motor in this application can implement the AF function and can also implement an optical image stabilization function of an optical image stabilizer (optical image stabilizer, OIS).

With reference to FIG. 7, the motor further includes a base assembly 70. The base assembly 70 includes the base 71 and a driving coil 72. A driving force in the y direction is generated between the driving coil 72 and the magnet 33 to enable the frame 31 to drive the lens carrier 21 to move in the y direction, to implement an OIS image stabilization function. In this embodiment, the magnet 33 is disposed on the frame 31, and the magnetically conductive sheet 24 is disposed on the lens carrier 21.

A circuit board 72a and a driver chip 72b that correspond to the driving coil 72 are disposed on the base 71, and both the driving coil 72 and the driver chip 72b are electrically connected to the circuit board 72b.

When the motor has both the AF function and the image stabilization function, the magnet 33, in the motor, that can generate the y direction is used to cooperate with the magnetically conductive sheet 24 to generate the magnetic attraction force. Because no additional magnet needs to be added, space occupation is reduced, and costs are reduced.

For example, with reference to FIG. 7, the motor further includes the magnetically conductive sheet 36 disposed on the frame 31 to attract the magnet 33 to the frame 31. For a function of the magnetically conductive sheet 36, reference may be made to a function of the magnetically conductive sheet 23, and details are not described again.

With reference to FIG. 7, the motor further includes the magnet 37 disposed on the frame 31 and a driving coil 73 disposed on the base 71. A driving force in the x direction is generated between the driving coil 73 and the magnet 37 to enable the frame 31 to drive the lens carrier 21 to move in the x direction, to implement the OIS image stabilization function.

A circuit board 73a and a driver chip 73b that correspond to the driving coil 73 are disposed on the base 71, and both the driving coil 73 and the driver chip 73b are electrically connected to the circuit board 73a.

For example, with reference to FIG. 7, the motor further includes the magnetically conductive sheet 38 disposed on the frame 31 to attract the magnet 37 to the frame 31. For a function of the magnetically conductive sheet 38, reference may be made to the function of the magnetically conductive sheet 23, and details are not described again.

It should be understood that the structures of the motor in FIG. 5 to FIG. 9 are merely schematic descriptions and should not constitute a limitation to embodiments of this application.

In an embodiment in which the motor does not need to implement the image stabilization function, that is, the motor in this application is merely used to implement the AF function, or the motor in this application is an AF motor independent of image stabilization, for example, the motor may not need the base assembly 70, and the frame assembly 30 may be configured to implement a related function of the base assembly 70. For example, the housing 10 is connected to the frame 31. A support structure is formed at the bottom of the frame 31 away from the lens, to support the lens carrier 21.

For example, positions of the magnet 22 and the magnetically conductive sheet 32 are interchanged, that is, the magnet 22 is disposed on the frame 31, and the magnetically conductive sheet 32 is disposed on the lens carrier 21. For example, positions of the magnet 33 and the magnetically conductive sheet 24 are interchanged, that is, the magnet 33 is disposed on the frame 31, and the magnetically conductive sheet 24 is disposed on the lens carrier 21.

In an embodiment in which the motor has both the AF function and the image stabilization function, in an embodiment in which the motor includes the magnetically conductive sheet 36, and the magnet 33 and the driving coil 72 that are used to generate the driving force in the y direction, for example, the magnetically conductive sheet 24 may not need to be disposed on the lens carrier 21, but a new magnet is disposed on the lens carrier 21, and the new magnet and the magnetically conductive sheet 36 form the magnetic attraction assembly 51b to generate the magnetic attraction force. In this embodiment, the new magnet may be the foregoing second magnet, the magnetically conductive sheet 36 may be the foregoing second magnetically conductive sheet, the second magnet is disposed on the lens carrier 21, and the second magnetically conductive sheet is disposed on the frame 31.

Based on the first magnet, the first magnetically conductive sheet, the second magnet, and the second magnetically conductive sheet defined above, a first driving coil, a third driving coil, and a third magnetically conductive sheet may further be defined in this application. In the structures shown in FIG. 5 to FIG. 9, the first magnet may be the magnet 22, the first magnetically conductive sheet may be the magnetically conductive sheet 32, the second magnet may be the magnet 33, the second magnetically conductive sheet may be the magnetically conductive sheet 24, the first driving coil may be the driving coil 34, the third magnetically conductive sheet is the magnetically conductive sheet 23, and the third driving coil may be the driving coil 72.

FIG. 10 to FIG. 13 are diagrams of a related structure of the motor in the case in which the two magnetic attraction assemblies 51 are respectively disposed on the two adjacent sides of the lens carrier 21 or the frame 31. With reference to FIG. 10 to FIG. 13, the following specifically describes the structure of the motor in this case.

In addition, a similar design of the motor in the case in which the two magnetic attraction assemblies 51 are respectively disposed on the two opposite sides of the lens carrier 21 or the frame 31 is only simply described or not described again, and a difference between the motor in this case and the motor in the case in which the two magnetic attraction assemblies 51 are respectively disposed on the two opposite sides of the lens carrier 21 or the frame 31 is emphatically described.

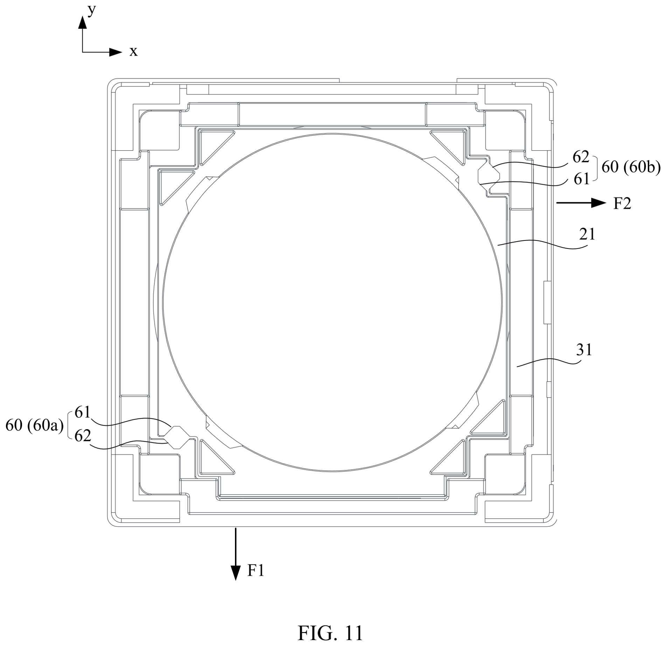

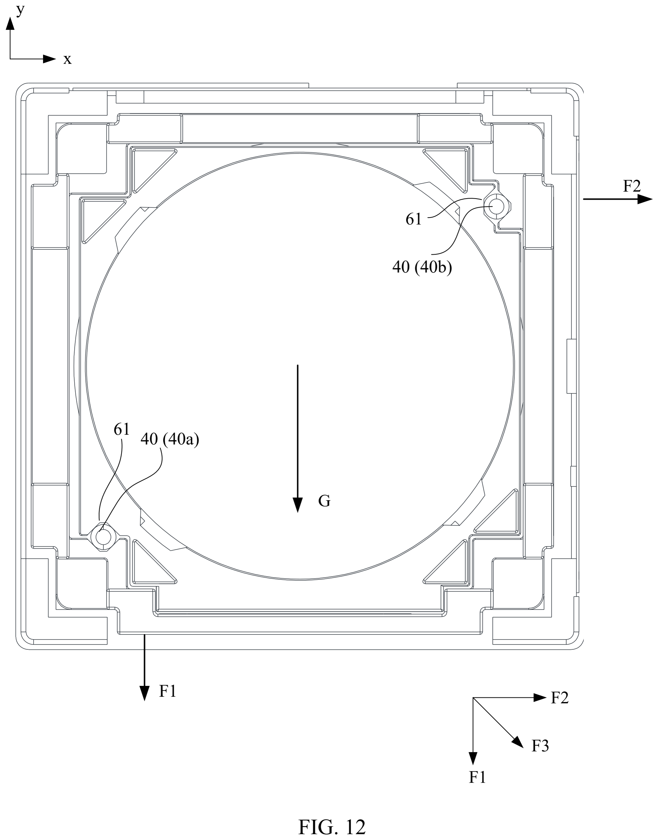

FIG. 10 is an exploded view of another structure of the motor according to an embodiment of this application. FIG. 11 is a diagram of a structure of the motor with the housing and the slide rail mechanisms removed according to an embodiment of this application. FIG. 12 is a diagram of a structure of the motor with the housing removed according to an embodiment of this application.

The two magnetic attraction assemblies 51 of the magnetic attraction mechanism 50 are respectively located on the two adjacent sides of the lens carrier 21 or the frame 31. One magnetic attraction assembly 51 includes the first magnet and the first magnetically conductive sheet disposed corresponding to the first magnet. The other magnetic attraction assembly 51 includes the second magnet and the second magnetically conductive sheet disposed corresponding to the second magnet. One of the first magnet and the first magnetically conductive sheet is disposed on the lens carrier 21, and the other one of the first magnet and the first magnetically conductive sheet is disposed on the frame 31. One of the second magnet and the second magnetically conductive sheet is disposed on the lens carrier 21, and the other one of the second magnet and the second magnetically conductive sheet is disposed on the frame 31.

As described above, for ease of description, the two magnetic attraction assemblies 51 are respectively denoted as the magnetic attraction assembly 51a and the magnetic attraction assembly 51b. With reference to FIG. 10, the magnetic attraction assembly 51a includes the magnet 22 and the magnetically conductive sheet 32, and the magnetic attraction assembly 51b includes the magnet 25 and the magnetically conductive sheet 38. Herein, the magnet 22 may be the foregoing first magnet, the magnetically conductive sheet 32 may be the first magnetically conductive sheet, the magnet 25 may be the second magnet, and the magnetically conductive sheet 38 may be the second magnetically conductive sheet.

In an example (as shown in FIG. 10), the magnet 22 is disposed on the lens carrier 21, and the magnetically conductive sheet 32 is disposed on the frame 31. In another example (not shown in the figure), the magnetically conductive sheet 32 is disposed on the lens carrier 21, and the magnet 22 is disposed on the frame 31.

In an example (not shown in the figure), the magnetically conductive sheet 38 is disposed on the lens carrier 21, and the magnet 25 is disposed on the frame 31. In another example (as shown in FIG. 10), the magnet 25 is disposed on the lens carrier 21, and the magnetically conductive sheet 38 is disposed on the frame 31.

With reference to FIG. 11 and FIG. 12, the two magnetic attraction assemblies 51 are respectively adapted to the two guide grooves 60. A direction of a magnetic attraction force generated by a magnetic attraction assembly 51 is the same as an opening direction of a first opening slot 61 of an adapted guide groove 60. Specifically, as shown in FIG. 11, the direction of the magnetic attraction force F1 generated by the magnetic attraction assembly 51a is the same as the opening direction of the first opening slot 61 of the guide groove 60a, and both are in a downward direction of the y direction. The direction of the magnetic attraction force F2 generated by the magnetic attraction assembly 51b is the same as the opening direction of the first opening slot 61 of the guide groove 60b, and both are in a rightward direction of the x direction. In this way, under the action of the magnetic attraction force F1 and the magnetic attraction force F2, the first opening slots 61 of the lens carrier 21 can both be in close contact with the slide rail mechanisms 40, so that the lens carrier 21 abuts against the slide rail mechanisms 40.

In the foregoing embodiment, it may be learned that, under the action of the magnetic attraction force F1 and the magnetic attraction force F2, an oblique combined force F3 (as shown in FIG. 12) is formed. The magnetic attraction force F1 cooperates with the adapted guide groove 60a, so that the first opening slot 61 of the guide groove 60a is in close contact with the slide rail mechanism 40a, and the magnetic attraction force F2 cooperates with the adapted guide groove 60b, so that the first opening slot 61 of the guide groove 60b is in close contact with the slide rail mechanism 40b. Therefore, on two sides of the lens carrier 21, the first opening slots 61 of the lens carrier 21 can both be in close contact with the slide rail mechanisms 40, an overall force is relatively uniform, and reliability is good, so that the lens carrier 21 can well abut against the slide rail mechanisms 40. In addition, because directions of the magnetic attraction force F1 and the magnetic attraction force F2 are perpendicular to each other, only simple force analysis may need to be performed, and moment analysis does not need to be performed. This simplifies a force analysis process, thereby simplifying a design.

Related data indicates that in the motor in which the two magnetic attraction assemblies 51 are respectively disposed on the two adjacent sides of the lens carrier 21 or the frame 31, the magnetic attraction force needed by the motor may only need to be 3 to 5 times the weight of the mover.

In some embodiments, with reference to FIG. 10, at least one of the magnet 22 and the magnetically conductive sheet 32 in the magnetic attraction assembly 51a is close to the slide rail mechanism 40a, and at least one of the magnet 25 and the magnetically conductive sheet 38 in the magnetic attraction assembly 51b is close to the slide rail mechanism 40b.

In the foregoing embodiment, when at least one of the magnet 22 and the magnetically conductive sheet 32 is close to the slide rail mechanism 40a, the magnetic attraction force generated by the magnetic attraction assembly 51a is close to the slide rail mechanism 40a. When at least one of the magnet 25 and the magnetically conductive sheet 38 is close to the slide rail mechanism 40b, the magnetic attraction force generated by the magnetic attraction assembly 51b is close to the slide rail mechanism 40b. That is, a magnetic attraction force generated by each magnetic attraction assembly 51 is close to the slide rail mechanism 40, and the magnetic attraction force under such structure may well act on the lens carrier 21, so that the lens carrier 21 well abuts against the slide rail mechanisms 40.

In some embodiments, the magnet 22 may be a magnet used to generate the driving force in the z direction. Based on this, the motor further includes the driving coil 34 used to generate the driving force in the z direction, and the motor includes the circuit board 34a and the driver chip 34b that correspond to the driving coil 34. Both the driving coil 34 and the driver chip 34b are electrically connected to the circuit board 34a. In this embodiment, the magnet 22 is disposed on the lens carrier 21, the magnetically conductive sheet 32 is disposed on the frame 31, and the driving coil 34, the circuit board 34a, and the driver chip 34b are disposed on the frame 31.

Positions of the driving coil 34 and the driver chip 34b that are not shown in FIG. 10 and connection relationships of the driving coil 34 and the driver chip 34b with other components are similar to those in FIG. 7. Details are not described again.

In an embodiment in which the motor can also implement an OIS function, in some embodiments, with reference to FIG. 10, the motor may further include the magnet 37 disposed on the frame 31 and the driving coil 73 disposed on the base 71. The driving force in the x direction is generated between the driving coil 73 and the magnet 37 to enable the frame 31 to drive the lens carrier 21 to move in the x direction, to implement the OIS image stabilization function.

With reference to an embodiment of the magnetically conductive sheet 38 of the magnetic attraction assembly 51b, the magnetically conductive sheet 38 in the magnetic attraction assembly 51b is disposed on the frame 31, and the magnet 25 of the magnetic attraction assembly 51b is disposed on the lens carrier 21. Compared with the magnet 37, the magnetically conductive sheet 38 is disposed closer to the frame 31 or the magnet 25. In this way, the magnetically conductive sheet 38 can have a good attraction function with the magnet 25 to generate a magnetic attraction force, and the magnetically conductive sheet 38 can further attract the magnet 37 to the frame 31, so that the magnet 37 does not easily fall off from the frame 31. In addition, the magnetically conductive sheet 38 can also serve as an effective means for reducing magnetic leakage of the magnet. Finally, magnetic field strength is strengthened, and the driving force of the motor is improved. In addition, the magnetically conductive sheet 38 may be used as a support member of the frame 31, to improve strength of the frame 31 and make the frame 31 less prone to deformation.

In the foregoing embodiment, the circuit board 73a and the driver chip 73b that correspond to the driving coil 73 are further disposed on the base 71, and both the driving coil 73 and the driver chip 73b are electrically connected to the circuit board 73a.

Positions of the driving coil 73 and the driver chip 73b that are not shown in FIG. 10 and connection relationships of the driving coil 73 and the driver chip 73b with other components are similar to those in FIG. 7. Reference may be made to related descriptions above. Details are not described again.

It may be understood that, in the motor that has the AF function and also has the image stabilization function, the motor has the magnet 37 used to generate the x direction and the magnetically conductive sheet 38 used to attract the magnet 37 to the frame 31, and the magnetically conductive sheet 38 in the motor is used to cooperate with the magnet 25 disposed on the lens carrier 21 to generate a magnetic attraction force. Because no additional magnetically conductive sheet needs to be added, space occupation can be reduced, and costs can be reduced.

In an embodiment in which the motor implements the OIS function, with reference to FIG. 10, the motor further includes the magnet 33 disposed on the frame 31 and the driving coil 72 disposed on the base 71. The driving force in the y direction is generated between the driving coil 72 and the magnet 33 to enable the frame 31 to drive the lens carrier 21 to move in the x direction, to implement the OIS image stabilization function.

The circuit board 72a and the driver chip 72b that correspond to the driving coil 72 are disposed on the base 71, and both the driving coil 72 and the driver chip 72b are electrically connected to the circuit board 72a.

A position of the magnet 33 that is not shown in FIG. 10 and a connection relationship between the magnet 33 and other components are similar to those in FIG. 7. Reference may be made to related descriptions above. Details are not described again.

Based on the first magnet, the first magnetically conductive sheet, the second magnet, and the second magnetically conductive sheet, the first driving coil, the third driving coil, and the third magnetically conductive sheet defined above, in the structures shown in FIG. 10 to FIG. 12, the first magnet may be the magnet 22, the first magnetically conductive sheet may be the magnetically conductive sheet 32, the second magnet may be the magnet 35, the second magnetically conductive sheet may be the magnetically conductive sheet 38, or the second magnet may be the magnet 37, the second magnetically conductive sheet may be a new magnetically conductive sheet (not shown in the figure) disposed on the lens carrier 21, the first driving coil may be the driving coil 34, the third magnetically conductive sheet is the magnetically conductive sheet 23, and the third driving coil may be the driving coil 73.

As described above, in an embodiment in which the motor also has the image stabilization function, for a magnetically conductive sheet or a magnet in one magnetic attraction assembly 51 (for example, the magnetic attraction assembly 51b), the magnetically conductive sheet or the magnet that are of the motor and are used for image stabilization may be used, to reduce space occupation and reduce costs.

From another perspective, regardless of whether the motor has the image stabilization function, both two magnets (the first magnet and the second magnet) in two magnetic attraction assemblies 21 may be independent magnets used for AF. Based on this, corresponding driving coils may be respectively configured for the two magnets. Each driving coil cooperates with a corresponding magnet to generate the driving force in the z direction, to implement the AF function of the motor. This structure implements dual drive for AF and effectively improves the driving force for AF.

That is, one magnetic attraction assembly 51 includes the first magnet and the first magnetically conductive sheet. The other magnetic attraction assembly 51 includes the second magnet and the second magnetically conductive sheet. One of the first magnet and the first magnetically conductive sheet is disposed on the lens carrier 21, and the other one of the first magnet and the first magnetically conductive sheet is disposed on the frame 31. One of the second magnet and the second magnetically conductive sheet is disposed on the lens carrier 21, and the other one of the second magnet and the second magnetically conductive sheet is disposed on the frame 31. In addition, the motor further includes the first driving coil and the second driving coil. The first driving coil is disposed corresponding to the first magnet, and the second driving coil is disposed corresponding to the second magnet. A driving force generated between the first driving coil and the first magnet enables the lens carrier 21 to move in the z direction, and a driving force generated between the second driving coil and the second magnet enables the lens carrier 21 to move in the z direction.

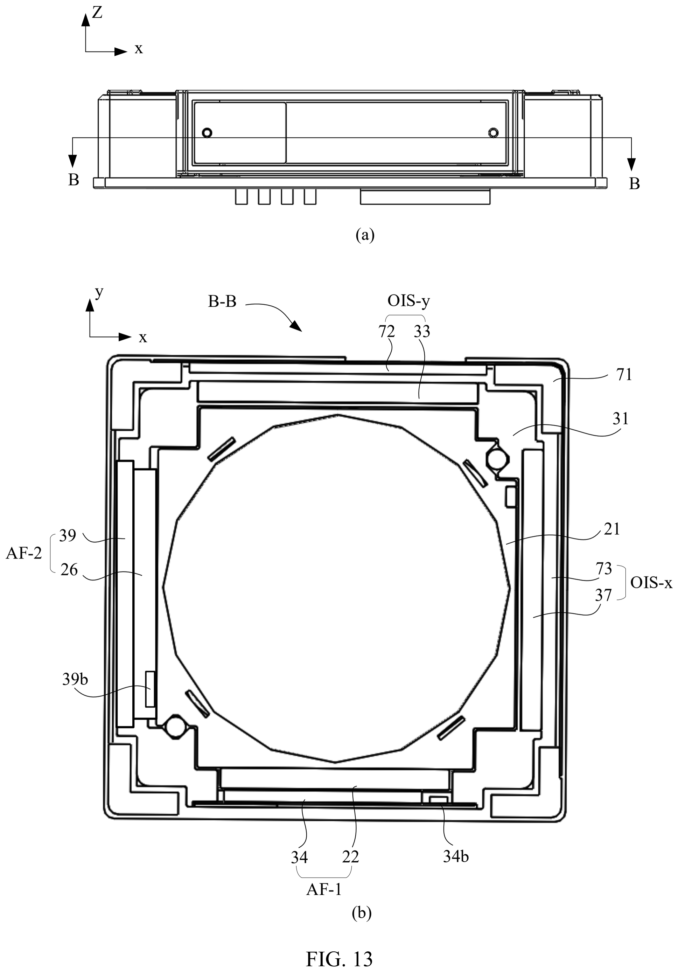

FIG. 13 is a diagram of another structure of the motor according to an embodiment of this application.

With reference to FIG. 13, one magnetic attraction assembly 51 includes the magnet 22 and the magnetically conductive sheet 32 (as shown in FIG. 10), and the other magnetic attraction assembly 51 includes the magnet 26 and the second magnetically conductive sheet (not shown in the figure). The driving coil 34 cooperates with the magnet 22 to generate the driving force in the z direction, and the driving coil 39 cooperates with the magnet 26 to generate the driving force in the z direction.

For ease of description, an overall part that includes the driving coil 34 and the magnet 22 and is configured to generate the driving force in the z direction is denoted as an AF-1 driving assembly, and an overall part that includes the driving coil 39 and the magnet 26 and is configured to generate driving force in the z direction is denoted as an AF-2 driving assembly. The magnet 22 may be the foregoing first magnet, the magnetically conductive sheet 32 may be the first magnetically conductive sheet, the magnet 26 may be the second magnet, the driving coil 34 may be the first driving coil, and the driving coil 39 may be the second driving coil.

In the foregoing embodiment, the corresponding first driving coil and the corresponding second driving coil are respectively configured for the first magnet and the second magnet, so that the first magnet and the first driving coil can form the driving force in the z direction, and the second magnet and the second driving coil can form the driving force in the z direction. This effectively improves the driving forces for AF, thereby improving a focusing speed of AF and imaging definition.

In an embodiment in which the motor provides a dual driving force of the AF, in some embodiments, both the first magnet and the second magnet are disposed on the lens carrier 21, and the first magnetically conductive sheet, the second magnetically conductive sheet, the first driving coil, and the second driving coil are all disposed on the frame 31. In this way, the first magnet and the second magnet are disposed on the lens carrier 21, and both the first driving coil and the second driving coil are disposed on the frame 31. This structural design facilitates wiring, to implement electrical connection of the driving coil.

In the foregoing embodiment in which the motor provides the dual driving force for the AF, in some embodiments, the first driving coil and the second driving coil may share one driver chip, so that the driving force for the AF can be improved, and costs can further be reduced.

In an embodiment in which the first driving coil and the second driving coil share one driver chip, quantities of coil turns and resistances of the first driving coil and the second driving coil may be designed based on additionally occupied space, to improve the driving force.

Related data indicates that the driving force can be increased by approximately 1.4125 times in the foregoing embodiment. It is assumed that when the motor includes the first driving coil used for AF and does not include the second driving coil, space occupied by the first driving coil is space of 4*4=16 turns of coil, a provided driving force is 16 mN, a resistance of one turn of coil is 1 $\Omega$, and a total resistance of 16 turns of coil is 16 $\Omega$. When the motor includes the first driving coil and the second driving coil used for AF, a half of the resistance needs to be distributed to each of the first driving coil and the second driving coil, and space of each driving coil may occupy only a coil of 8 $\Omega$. It is assumed that a quantity of turns is x. In this case, x=1.1892 is obtained based on a formula $\frac{1}{x^2} \times (\frac{4}{x})^2 = 8$ , and a ratio of driving forces of the first driving coil and the second driving coil being 1.4125 is obtained based on a formula $(\frac{4}{x})^2 \times 2 \Big/ 16 = 1.4125$ . In other words, when the first driving coil and the second driving coil share one driver chip, the driving force can be increased by approximately 1. 4125 times.

To better improve the driving force for AF, in some other embodiments, the motor further includes a first driver chip and a second driver chip. The first driver chip is electrically connected to the first driving coil, and the second driver chip is electrically connected to the second driver chip. With reference to FIG. 13, the driving coil 34 is electrically connected to the driver chip 34b, and the driving coil 39 (that is, the second driving coil) is electrically connected to a driver chip 39b.

In this way, the corresponding driver chips are respectively configured for the first driving coil and the second driving coil, and each driver chip cooperates with a corresponding driving coil, so that double driving forces used for AF can be provided.

In an embodiment in which the motor has both the AF function and the image stabilization function, with reference to FIG. 13, the AF-1 driving assembly and the AF-2 driving assembly are disposed in a staggered manner with an OIS-x driving assembly and an OIS-y driving assembly. The OIS-x driving assembly is an overall structure that includes the magnet 37 and the driving coil 73 and is configured to generate the driving force in the x direction, and the OIS-y driving assembly is an overall structure that includes the magnet 33 and the driving coil 72 and is configured to generate the driving force in the y direction.

It should be understood that the structures of the motor shown in FIG. 10 to FIG. 13 are merely schematic descriptions and should not constitute a limitation to embodiments of this application.

In an embodiment in which the motor does not need to implement the image stabilization function, that is, the motor in this application is simply used to implement the AF function, or the motor in this application is the AF motor independent of image stabilization, for example, the motor may not need the base assembly 70, and the frame assembly 30 may be configured to implement the related function of the base assembly 70. For example, the housing 10 is connected to the frame 31. The support structure is formed at the bottom of the frame 31 away from the lens, to support the lens carrier 21.

For example, the positions of the magnet 22 and the magnetically conductive sheet 32 are interchanged, that is, the magnet 22 is disposed on the frame 31, and the magnetically conductive sheet 32 is disposed on the lens carrier 21. For example, the positions of the magnet 25 and the magnetically conductive sheet 38 are interchanged, that is, the magnet 25 is disposed on the frame 31, and the magnetically conductive sheet 37 is disposed on the lens carrier 21.

In an embodiment in which the motor has both the AF function and the image stabilization function, in an embodiment in which the motor includes the magnetically conductive sheet 36, and the magnet 33 and the driving coil 72 that are used to generate the driving force in the y direction, for example, the magnetically conductive sheet 24 may not need to be disposed on the lens carrier 21, but a new magnet is disposed on the lens carrier 21, and the new magnet and the magnetically conductive sheet 36 form the magnetic attraction assembly 51b to generate the magnetic attraction force. In this embodiment, the new magnet may be the foregoing second magnet, the magnetically conductive sheet 36 may be the foregoing second magnetically conductive sheet, the second magnet is disposed on the lens carrier 21, and the second magnetically conductive sheet is disposed on the frame 31.

In an embodiment in which the motor has both the AF function and the image stabilization function, in an embodiment in which the motor includes the magnet 37 and the driving coil 73, for example, the magnet 25 may not need to be disposed on the lens carrier, but a new magnetically conductive sheet is disposed on the lens carrier 21, and the new magnetically conductive sheet and the magnet 37 form the magnetic attraction assembly 51b to generate the magnetic attraction force. In this embodiment, the new magnetically conductive sheet may be the foregoing second magnetically conductive sheet, and the magnet 37 may be the foregoing second magnet. It may be understood that, in this embodiment, the magnet 37, in the motor, that can generate the x direction is used to cooperate with the new magnetically conductive sheet disposed on the lens carrier 21 to generate the magnetic attraction force. Because no additional magnet needs to be added, space occupation is reduced, and costs are reduced.

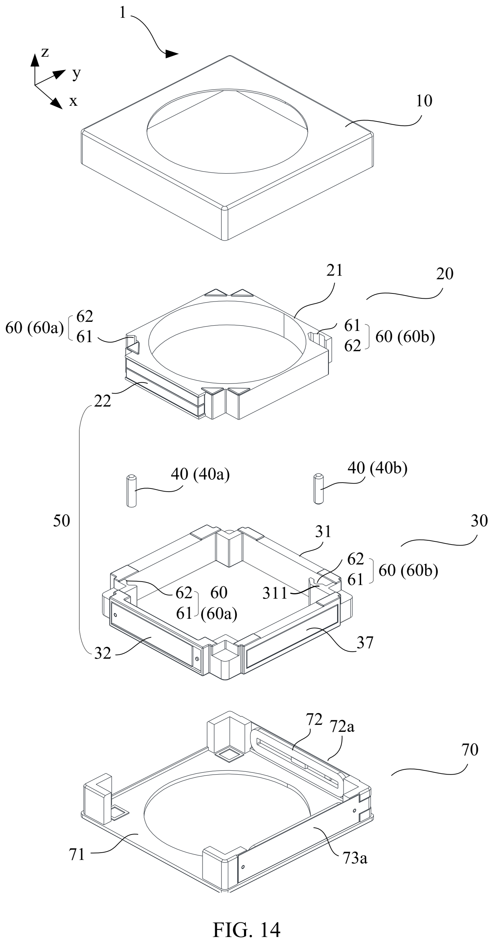

FIG. 14 to FIG. 18 are diagrams of a related structure of the motor in a case in which the magnetic attraction mechanism includes one magnetic attraction assembly. With reference to FIG. 14 to FIG. 18, the following specifically describes the structure of the motor in this case.

In addition, a similar design of the motor in the case in which the two magnetic attraction assemblies 51 are respectively disposed on two sides of the lens carrier 21 or the frame 31 is only simply described, and a difference between the motor in this case and the foregoing motor is emphatically described.

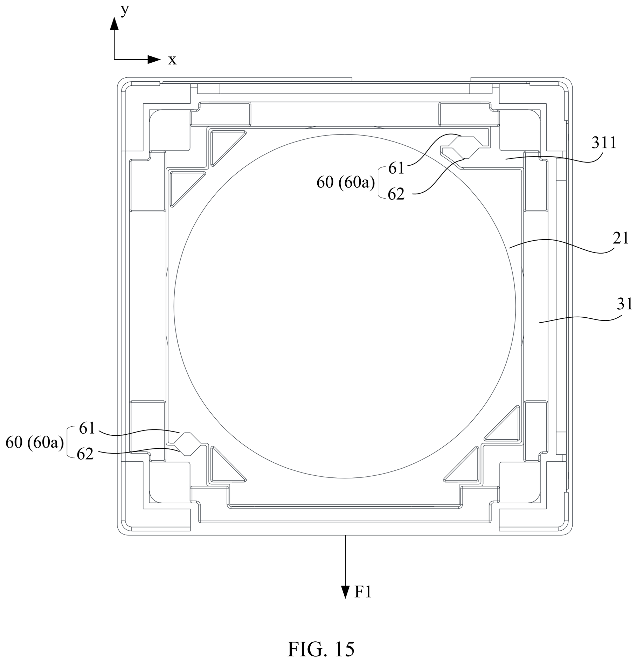

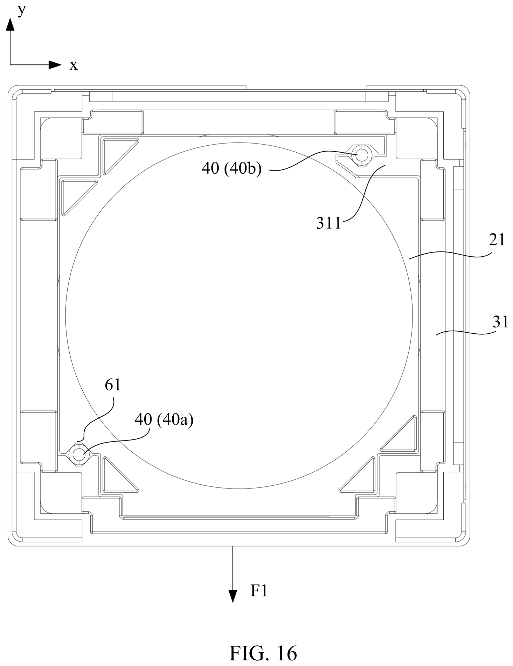

FIG. 14 is an exploded view of another structure of the motor in FIG. 2 according to an embodiment of this application. FIG. 15 is a diagram of a structure of the motor with the housing and the slide rail mechanisms removed according to an embodiment of this application. FIG. 16 is a diagram of a structure of the motor with the housing removed according to an embodiment of this application.

In this embodiment, the magnetic attraction mechanism 50 is located on one side of the lens carrier 21 and includes one magnetic attraction assembly. A direction of a magnetic attraction force generated by the magnetic attraction mechanism 50 is the same as an opening direction of a first opening slot 61 of one guide groove 60. The magnetic attraction mechanism 50 includes the first magnet and the first magnetically conductive sheet. One of the first magnet and the first magnetically conductive sheet is disposed on the lens carrier 21, and the other one of the first magnet and the first magnetically conductive sheet is disposed on the frame 31. In addition, a limiting structure 311 is formed on the frame 31, the limiting structure 311 and the magnetic attraction mechanism 50 are respectively located on two opposite sides of the lens carrier 21, and the limiting structure 311 is configured to restrict the lens carrier 21 from shaking in a direction close to the magnetic attraction mechanism 50.

With reference to FIG. 14 to FIG. 16, the magnetic attraction mechanism 50 is located on one side of the lens carrier 21. The direction of the magnetic attraction force F1 generated by the magnetic attraction mechanism 50 is the same as the opening direction (as shown in FIG. 15) of the first opening slot 61 of the guide groove 60a. The magnetic attraction mechanism 50 includes the magnet 22 and the magnetically conductive sheet 32. In an example (as shown in FIG. 14), the magnet 22 is disposed on the lens carrier 21, and the magnetically conductive sheet 32 is disposed on the frame 31. In another example (not shown in the figure), the magnetically conductive sheet 32 is disposed on the lens carrier 21, and the magnet 22 is disposed on the frame 31. Herein, the magnet 22 may be the foregoing first magnet, and the magnetically conductive sheet 32 may be the first magnetically conductive sheet.

The limiting structure 311 is formed on the frame 31 and is located on the other side of the lens carrier 21. The limiting structure 311 and the magnetic attraction mechanism 50 are respectively located on the two opposite sides of the lens carrier 21. The limiting structure 311 may provide, to the lens carrier 21, a force in a direction opposite to that of the magnetic attraction force F1, to restrict the lens carrier 21 from shaking in the direction close to the magnetic attraction mechanism 50.

In the foregoing embodiment, when a single-sided magnetic attraction force F1 is generated by the magnetic attraction mechanism 50, to avoid a problem, caused by single-sided magnetic attraction, that the lens carrier 21 moves in the direction close to the magnetic attraction mechanism 50 to cause poor contact between the lens carrier 21 and the slide rail mechanisms 40, the limiting structure 311 is disposed on one side opposite to the magnetic attraction mechanism 50. This can restrict the lens carrier 21 from shaking in the direction close to the magnetic attraction mechanism 50, so that close contact between the slide rail mechanisms 40 and the lens carrier 21 is maintained as much as possible, and the lens carrier 21 abuts against the slide rail mechanisms 40 as much as possible. In addition, because a force of single-sided magnetic attraction is simple, only simple force analysis may need to be performed, and moment analysis does not need to be performed. This simplifies a force analysis process, thereby simplifying a design.

In some embodiments, with reference to FIG. 16, the limiting structure 311 is disposed adjacent to the slide rail mechanism 40b.

If a length of the frame 31 in the x direction is used as a reference, during adjacent disposition, a midpoint of the length of the frame 31 in the x direction may be used as a reference. When the limiting structure 311 is disposed on one side, of the midpoint, close to the slide rail mechanism 40b, it may be considered that the limiting structure 311 is disposed adjacent to the slide rail mechanism 40b. It may be understood that the magnetic attraction mechanism 50 is adapted to the guide groove 60a and can well act on the sliding mechanism 40a accommodated in the guide groove 60a. The limiting structure 311 is disposed opposite to the magnetic attraction mechanism 50, and the limiting structure 311 can act on the sliding mechanism 40b. When the limiting structure 311 is disposed adjacent to the sliding mechanism 40b, a force, provided by the limiting structure 311, whose direction is opposite to the direction of the magnetic attraction force can well act on the slide rail mechanism 40b and perform limiting. In combination with the magnetic attraction force, close contact between the two slide rail mechanisms 40 and the lens carrier 21 can be well maintained, so that the lens carrier 21 well abuts against the slide rail mechanisms 40, and the structure is more stable.

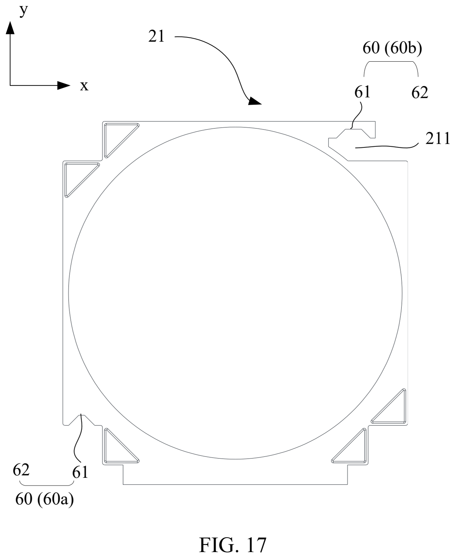

FIG. 17 is a diagram of a structure of the lens carrier according to an embodiment of this application.

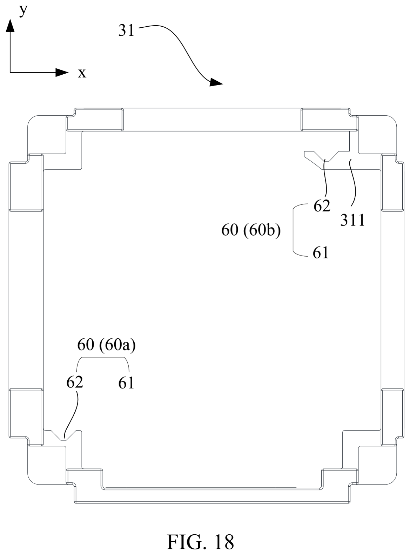

FIG. 18 is a diagram of a structure of the frame according to an embodiment of this application.

With reference to FIG. 18, a slot 211 is formed at a position, of the lens carrier 21, adjacent to the slide rail mechanism 40b accommodated in the guide groove 60b. The slot 211 communicates with the first opening slot 61 of the guide groove 60b. An extension direction of the slot 211 (the x direction) is perpendicular to the opening direction of the first opening slot 61 (the y direction). The limiting structure 311 is inserted into the slot 211, and a second opening slot 62 of the guide groove 60b is formed on the limiting structure 311.

That is, the limiting structure 311 and the lens carrier 21 jointly form the guide groove 40b. The slot 211 for the limiting structure 311 to insert communicates with the first opening slot 61 of the guide groove 60b. This structure in which the guide groove 60b and the limiting structure 311 are integrated has a compact layout and avoids occupation of large space. In addition, the force, provided by the limiting structure 311, whose direction is opposite to the direction of the magnetic attraction force can better act on the slide rail mechanism 40b and perform limiting. In combination with the magnetic attraction force, close contact between the two slide rail mechanisms 40 and the lens carrier 21 can be better maintained, so that the lens carrier 21 better abuts against the slide rail mechanisms 40, and the structure is more stable.

It should be understood that, in embodiments of this application, unless otherwise specified and limited, terms such as "connection", "fastening", and "contact" should be understood in a broad sense. For a person of ordinary skill in the art, specific meanings of the foregoing terms in embodiments of this application may be understood based on a specific situation.

For example, the "connection" may be various connection manners such as fastening, a rotational connection, a flexible connection, a sliding connection, integrated molding, an electrical connection, and a contact connection, may be direct connection, indirect connection through an intermediate medium, or an internal communication between two elements or an interaction relationship between two elements.

For example, for "fastening", one element may be directly or indirectly fastened to another element. The fastening may include manners such as a mechanical connection, welding, bonding, and integrated molding. The mechanical connection may include manners such as riveting, a bolt connection, a threaded connection, a key-pin connection, a buckle connection, a lock connection, and insertion. Bonding may include adhesive bonding, solvent bonding, and the like.

For example, "contact" may be explained as direct or indirect contact between one element and another element. In addition, the contact between two components described in embodiments of this application may be understood as contact within an allowable range of a mounting error, and there may be a small gap caused by the mounting error.

It should be further understood that "parallel" or "perpendicular" described in embodiments of this application may be understood as "approximately parallel" or "approximately perpendicular".

It should be further understood that the terms "first" and "second" are used merely for the purpose of description, and shall not be understood as indicating or implying relative importance or implicitly indicating a quantity of indicated technical features. A feature defined by "first" or "second" may explicitly or implicitly include one or more features.

In embodiments of this application, unless otherwise explicitly specified and defined, that a first feature is "on" or "under" a second feature may mean that the first feature and the second feature are in direct contact, or the first feature and the second feature are in indirect contact through an intermediate medium. In addition, that the first feature is "on", "over", and "above" the second feature may mean that the first feature is directly above or obliquely above the second feature, or only indicates that a horizontal height of the first feature is higher than a horizontal height of the second feature. That the first feature is "under", "below", and "underneath" the second feature may be that the first feature is directly below or obliquely below the second feature, or only indicates that the horizontal height of the first feature is less than the horizontal height of the second feature.

It should be further understood that an orientation or a position relationship (if used) indicated by the terms "inside", "outside", "above", "bottom", "front", and "back" indicate an orientation or a location relationship shown based on the accompanying drawings, and are merely intended to facilitate description of this application and simplification of description, but are not intended to indicate or imply that the indicated apparatus or component should have a specific orientation or should be constructed and operated in a specific orientation. Therefore, the terms cannot be understood as a limitation on this application.

In embodiments of this application, "at least one" means one or more, and "a plurality of" means two or more. "At least a part of a component" means a part or all of the component. The term "and/or" describes an association relationship between associated objects and indicates that three relationships may exist. For example, A and/or B may indicate cases: Only A exists, both A and B exist, and only B exists, where A and B may be singular or plural. The character "/" generally indicates an "or" relationship between associated objects.

It should be noted that in embodiments of this application, a same reference numeral indicates a same component or a same part. For a same part in embodiments of this application, only one part or component may be used as an example in the figure to mark a reference numeral. It should be understood that, for another same part or component, the reference numeral is also applicable.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims. In summary, the foregoing descriptions are merely preferred embodiments in the technical solution of this application and are not intended to limit the protection scope of this application. Any modification, equivalent replacement, or improvement made without departing from the spirit and principle of this application shall fall within the protection scope of this application.

**Claims**

1. A motor, comprising a housing, a lens carrier, a frame, a magnetic attraction mechanism and two slide rail mechanisms, wherein the lens carrier, the frame, the magnetic attraction mechanism and the two slide rail mechanisms accommodated in the housing, the lens carrier is configured to mount a lens;

   the two slide rail mechanisms are diagonally disposed between the frame and the lens carrier on a first plane and are configured to provide sliding support surfaces for movement of the lens carrier in a z direction, the first plane is perpendicular to the z direction, and the z direction is parallel to an optical axis direction of the lens; and
   one part of the magnetic attraction mechanism is disposed on the lens carrier, and the other part of the magnetic attraction mechanism is disposed on the frame, and a magnetic attraction force generated by the magnetic attraction mechanism is used to abut the lens carrier against the slide rail mechanisms.

2. The motor according to claim 1, wherein the slide rail mechanism comprises a guide post.

3. The motor according to claim 1 or 2, wherein two guide grooves are formed between the lens carrier and the frame, the two guide grooves correspond to the two slide rail mechanisms, one guide groove accommodates the corresponding slide rail mechanism, and the guide groove comprises a first opening slot disposed on the lens carrier and a second opening slot disposed on the frame.

4. The motor according to claim 3, wherein the magnetic attraction mechanism comprises two magnetic attraction assemblies, the two magnetic attraction assemblies are respectively located on two sides of the lens carrier or the frame, the two magnetic attraction assemblies are respectively adapted to the two guide grooves, and a direction of a magnetic attraction force generated by the magnetic attraction assembly is the same as an opening direction of the first opening slot of the adapted guide groove, wherein one magnetic attraction assembly comprises a first magnet and a first magnetically conductive sheet disposed corresponding to the first magnet, the other magnetic attraction assembly comprises a second magnet and a second magnetically conductive sheet disposed corresponding to the second magnet, one of the first magnet and the first magnetically conductive sheet is disposed on the lens carrier, the other one of the first magnet and the first magnetically conductive sheet is disposed on the frame, one of the second magnet and the second magnetically conductive sheet is disposed on the lens carrier, and the other one of the second magnet and the second magnetically conductive sheet is disposed on the frame.

5. The motor according to claim 4, wherein the two magnetic attraction assemblies are respectively located on two opposite sides of the lens carrier or the frame, at least one of the first magnet and the first magnetically conductive sheet is close to one of the slide rail mechanisms, and at least one of the second magnet and the second magnetically conductive sheet is close to the other slide rail mechanism.

6. The motor according to claim 4, wherein the two magnetic attraction assemblies are respectively located on two adjacent sides of the lens carrier or the frame.

7. The motor according to claim 6, wherein at least one of the first magnet and the first magnetically conductive sheet is close to one of the slide rail mechanisms, and at least one of the second magnet and the second magnetically conductive sheet is close to the other slide rail mechanism.

8. The motor according to claim 6 or 7, wherein the motor further comprises a first driving coil and a second driving coil, a driving force generated between the first driving coil and the first magnet enables the lens carrier to move in the z direction, and a driving force generated between the second driving coil and the second magnet enables the lens carrier to move in the z direction.

9. The motor according to claim 8, wherein both the first magnet and the second magnet are disposed on the lens carrier, and the first magnetically conductive sheet, the second magnetically conductive sheet, the first driving coil, and the second driving coil are all disposed on the frame.

10. The motor according to claim 8 or 9, wherein the motor further comprises a first driver chip and a second driver chip, the first driver chip is electrically connected to the first driving coil, and the second driver chip is electrically connected to the second driver chip.

11. The motor according to any one of claims 5 to 7, wherein the second magnet is disposed on the frame, and the second magnetically conductive sheet is disposed on the lens carrier; and
the motor further comprises a third driving coil disposed on the frame, a driving force generated between the third driving coil and the second magnet enables the frame to drive the lens carrier to move in a first direction, and the first direction is perpendicular to the z direction.

12. The motor according to claim 3, wherein the two guide grooves comprise a first guide groove and a second guide groove, the two slide rail mechanisms comprise a first slide rail mechanism and a second slide rail mechanism, the first guide groove accommodates the first slide rail mechanism, and the second guide groove accommodates the second slide rail mechanism;

the magnetic attraction mechanism is located on one side of the lens carrier, a direction of the magnetic attraction force generated by the magnetic attraction mechanism is the same as an opening direction of the first opening slot of the first guide groove, the magnetic attraction mechanism comprises a first magnet and a first magnetically conductive sheet, one of the first magnet and the first magnetically conductive sheet is disposed on the lens carrier, and the other one of the first magnet and the first magnetically conductive sheet is disposed on the frame; and
a limiting structure is formed on the frame, the limiting structure and the magnetic attraction mechanism are respectively located on two opposite sides of the lens carrier, and the limiting structure is configured to restrict the lens carrier from shaking in a direction close to the magnetic attraction mechanism.

13. The motor according to claim 12, wherein the limiting structure is disposed adjacent to the second slide rail mechanism.

14. The motor according to claim 13, wherein a slot is formed at a position, of the lens carrier, adjacent to the second slide rail mechanism, the slot communicates with the first opening slot of the second guide groove, an extension direction of the slot is perpendicular to an opening direction of the first opening slot, the limiting structure is inserted into the slot, and the second opening slot of the second guide groove is formed on the limiting structure.

15. The motor according to any one of claims 4 to 7 and 11 to 14, wherein the first magnet is disposed on the lens carrier; and
the motor further comprises a first driving coil disposed on the frame, the first driving coil is disposed on the frame, and a driving force generated between the first driving coil and the first magnet enables the lens carrier to move in the z direction.

16. The motor according to claim 15, wherein the motor further comprises a third magnetically conductive sheet disposed on the lens carrier to attract the first magnet to the lens carrier, and the third magnetically conductive sheet and the first magnetically conductive sheet are respectively located on two sides of the first magnet.

17. A camera module, comprising a lens and the motor according to any one of claims 1 to 16.

18. An electronic device, comprising the camera module according to claim 17.

100

y
x
z

11

12

13

(a)

100

z
y
x

11

12

(b)

FIG. 1

FIG. 2

FIG. 3

FIG. 4

FIG. 5

FIG. 6

FIG. 7

FIG. 8

FIG. 9

FIG. 10

FIG. 11

EP 4 742 517 A1

FIG. 12

31

(a)

(b)

FIG. 13

1

z

y

x

10

21

20

60 (60a) ⌈62
⌊61

61
62⌋ 60 (60b)

22

50

40 (40a)

40 (40b)

30

31

62⌉
61⌋ 60 (60b)

62⌉
61⌋ 60
(60a)

311

32

37

72 72a

70

71

73a

FIG. 14

FIG. 15

y

x

40 (40b)

311

21

31

61

40 (40a)

F1

FIG. 16

FIG. 17

FIG. 18

## INTERNATIONAL SEARCH REPORT

| International application No. |
| --- |
| **PCT/CN2024/106905** |

**A.    CLASSIFICATION OF SUBJECT MATTER**

H02K33/18(2006.01)i

According to International Patent Classification (IPC) or to both national classification and IPC

**B.    FIELDS SEARCHED**

Minimum documentation searched (classification system followed by classification symbols)

IPC:H02K

Documentation searched other than minimum documentation to the extent that such documents are included in the fields searched

Electronic data base consulted during the international search (name of data base and, where practicable, search terms used)

CNTXT, ENTXTC, VEN: 滑轨, 滚珠, 导向柱, 导向轴, 滑轴, 对角, 中心对称, 磁吸, 吸合, 吸住, 相吸, glid+, guid+, diagonal +, magnet+, attract+

**C.    DOCUMENTS CONSIDERED TO BE RELEVANT**

| Category* | Citation of document, with indication, where appropriate, of the relevant passages | Relevant to claim No. |
| --- | --- | --- |
| X | CN 217985166 U (HUAWEI TECHNOLOGIES CO., LTD.) 06 December 2022 (2022-12-06) description, paragraphs 89-221, and figures 1-21 | 1, 2, 17, 18 |
| Y | CN 217985166 U (HUAWEI TECHNOLOGIES CO., LTD.) 06 December 2022 (2022-12-06) description, paragraphs 89-221, and figures 1-21 | 3-16 |
| Y | CN 218958770 U (LIAONING ZHONGLAN ELECTRONIC TECHNOLOGY CO., LTD.) 02 May 2023 (2023-05-02) description, paragraphs 33-45, and figures 1-9 | 3-16 |
| A | CN 115421272 A (GUANGDONG OPPO MOBILE TELECOMMUNICATIONS CORP., LTD.) 02 December 2022 (2022-12-02) entire document | 1-18 |
| A | KR 20170143197 A (RBK EMD CO., LTD.) 29 December 2017 (2017-12-29) entire document | 1-18 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 September 2024** | **26 September 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2024/106905**

| Patent document cited in search report | | | Publication date (day/month/year) | Patent family member(s) | | | Publication date (day/month/year) |
|---|---|---|---|---|---|---|---|
| CN | 217985166 | U | 06 December 2022 | None | | | |
| CN | 218958770 | U | 02 May 2023 | None | | | |
| CN | 115421272 | A | 02 December 2022 | None | | | |
| KR | 20170143197 | A | 29 December 2017 | KR | 101847433 | B1 | 10 April 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311332772